(19) **Europäisches Patentamt / European Patent Office / Office européen des brevets**

(11) **EP 1 802 013 B1**

(12) **EUROPEAN PATENT SPECIFICATION**

(45) Date of publication and mention
of the grant of the patent:
**04.05.2011 Bulletin 2011/18**

(51) Int Cl.:
*H04J 3/06* (2006.01)  *H04B 7/26* (2006.01)
*H04L 12/56* (2006.01)

(21) Application number: **05027911.6**

(22) Date of filing: **20.12.2005**

(54) **Synchronization method for network nodes, corresponding network and node thereof**

Verfahren zur Synchronisation von Netzwerkknoten, entsprechendes Netzwerk und Netzwerkknoten

Procédé pour la synchronisation des noeuds d'un réseau, réseau et noeud correspondant

(84) Designated Contracting States:
**DE GB**

(43) Date of publication of application:
**27.06.2007 Bulletin 2007/26**

(73) Proprietor: **NTT DoCoMo, Inc.**
**Chiyoda-Ku**
**Tokyo 100-6150 (JP)**

(72) Inventors:
• **Tyrrell, Alexander**
**85356 Freising (DE)**
• **Auer, Gunther**
**80339 München (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**WO-A-00/51366     DE-A1- 10 306 788**

• **YAO-WIN HONG ET AL: "Time synchronization and reach-back communications with pulse-coupled oscillators for UWB wireless ad hoc networks" ULTRA WIDEBAND SYSTEMS AND TECHNOLOGIES, 2003 IEEE CONFERENCE ON NOV. 16-19, 2003, PISCATAWAY, NJ, USA,IEEE, 16 November 2003 (2003-11-16), pages 190-194, XP010683755 ISBN: 0-7803-8187-4**
• **J. ELSON, L. GIROD, D. ESTRIN: "Fine-Grained Network Time Snchronization using Reference Broadcasts" PROC. 5TH SMP. OP. SYS. DESIGN AND IMPLEMENTATION, December 2002 (2002-12), XP002376792 Boston, MA**

EP 1 802 013 B1

**Description**

The present invention relates to the field of network synchronization and in particular, to the field of self- organized network synchronization.

As the number of communication devices continues to multiply (mobile phones, notebooks, PDAs (Personal Digital Assistants), media centers, cars, etc.), there is an emerging need to communicate in a ubiquitous fashion. This leads to the development of ad hoc and peer-to-peer networks, where a device can seamlessly communicate with any other device without the need of a centralized interface. These networks intrinsically form self-organized systems, where each node employs a set of simple rules to achieve something larger than the sum of its parts. Well designed distributed algorithms should prove to be flexible, scalable, robust and adapt well to changes in the topology.

Decentralized networks, unlike centralized networks, comprise no central coordination unit to manage the synchronization and behaviour of the terminals. Decentralized networks or self-organizing network approaches are for example used to establish ad-hoc networks. Synchronization is defined in the sense of aligning locally individual timing units of nodes, such that all nodes adhere to one common time scale. To this end, the synchronization defines a common slot structure, in the way that the beginning and end of a time slot are common parameters. Synchronization is necessary, for instance, to deploy a time slotted MAC (Medium Access Control) protocol.

Interesting examples of spontaneous, self-organizing synchronization can be found in nature. Male fireflies, which are mainly found in certain parts of southeast Asia gather at night on trees along riverside banks, and synchronize their blinking in order to get the attention of female fireflies, as described in "Coupled oscillators and biological synchronization," by S. H. Strogatz and I. Stewart, Scientific American, vol. 269, pp. 68-74, December 1993, in the following [3], and "Spontaneous synchronization in nature" by S. H. Strogatz, IEEE International Frequency Control Symposium, 1997, in the following [4]. This leads to impressive swarms of fireflies and it seems as though the whole tree is flashing in perfect synchrony. The theoretical framework for the convergence of synchrony was published in 1990 by Mirollo and Strogatz in "Synchronization of pulse-coupled biological oscillators," SIAM J. APPL. MATH, vol. 50, pp. 1645-1662, December 1990, in the following [1] . Communication through pulses of negligible duration is assumed.

A mathematical approach to describe such synchronisations is based on the concept of "pulse-coupled oscillators". This term refers to systems that oscillate periodically in time and interact each time they complete an oscillation. This interaction takes the form of a pulse that is perceived by neighboring oscillators. These systems are known to show different behaviors ranging from perfect synchrony to pattern formation, as described in "Synchronization, diversity, and topology of networks of integrate and fire oscillators," by M. L. X. Guardiola, A. Diaz-Guilera and C. J. Perez, Phys. Rev. E, vol. 62, pp. 5565-5570, April 2000, in the following [5].

In the following it will be described how time synchronization is achieved between pulse-coupled oscillators. First, a mathematical model will be associated to these oscillators. Then it will be examined how two or more pulse-coupled oscillators can synchronize to pulse as one.

As a simple mathematical model or representation, a pulse-coupled oscillator is described only by its phase function. This function evolves linearly over time until it reaches a threshold value $\Phi_{threshold}$. When this happens, the oscillator fires, and resets its phase. Thus, if not coupled with any other oscillator, it will fire with a period equal to T, in the following this period will, therefore, be referred to as phase function period T or oscillator period T.

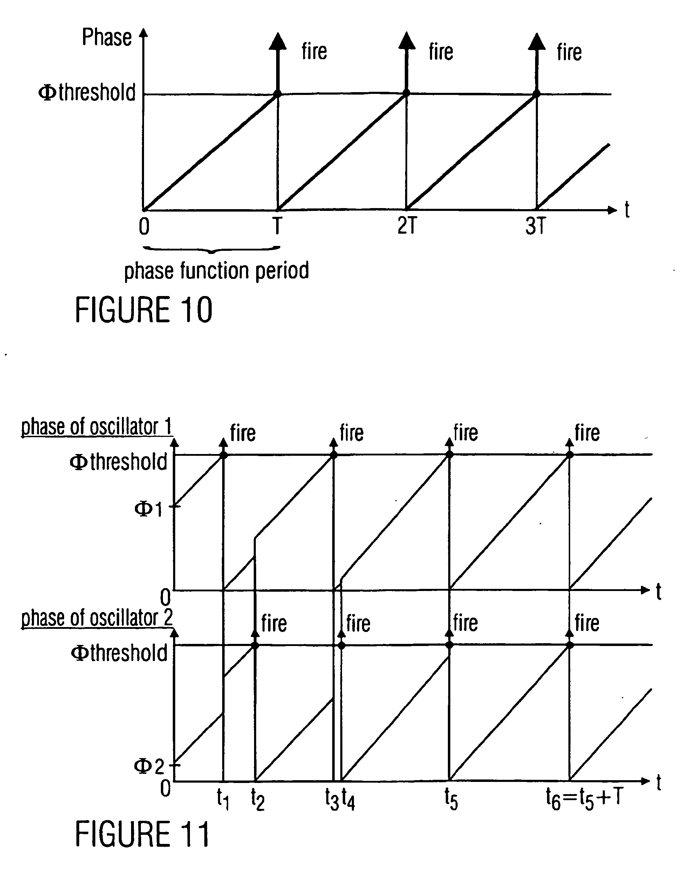

Due to the evolution of this function, these oscillators are also referred to as integrate-and-fire oscillators. Fig. 10 shows the evolution of the phase function of an isolated oscillator.

This model approximates the behavior of a biological pulse-coupled oscillator. The firing instant corresponds to an emission of light for a firefly, to an electrical impulse for a neuron or a transmission of a synchronization signal for a node. In the following one will see how such oscillators are able to synchronize by modifying their phase function when receiving a pulse.

Based only on the phase function described previously, two identical oscillators are able to synchronize their firing instant within a few periods. To achieve this, an oscillator modifies its phase when receiving a pulse from another integrate-and-fire oscillator.

Fig. 11 shows how two oscillators can synchronize using this scheme. At instant 0, the oscillators are not synchronized. Their initial phases, $\Phi_1$ and $\Phi_2$, are randomly distributed between 0 and $\Phi_{threshold}$. At this time, each oscillator increments its phase linearly over time until one of them reaches $\Phi_{threshold}$. At $t_1$, oscillator 1 is the first to reach the threshold. It fires a pulse and resets its phase. As the oscillators are coupled, oscillator 2 will then increment its own phase. The increment is determined by the Phase Return Curve (PRC) $\Delta(\Phi)$. Comments on this function will be made later. At $t_2$, oscillator 2 fires, and oscillator 1 increases its phase accordingly. This scheme goes on until $t_5$ where the firing of oscillator 1 causes oscillator 2 to fire at the same instant. At this time, both oscillators are synchronized. At $t_6 = t_5 + T$, they fire at the same instant.

In other words, the oscillators synchronize on the pulses of other oscillators in a step by step manner, wherein each step, e.g. each increase of the phase based on the phase response curve when receiving a pulse, has an associated synchronization state, e.g. the present phase of the oscillator when receiving the pulse. This present phase also represents a phase difference or measure of synchrony in respect to the firing oscillator. The time instant the oscillator will transmit its next pulse depends on the synchronization state, e.g. phase, and the associated step, e.g. increment based on the phase response curve. The more synchronized the oscillators are, the smaller becomes the phase difference between the individual nodes and also the time difference between the instants they fire.

If an oscillator is isolated, its phase $\Phi$ will increment linearly over time. If coupled to other oscillators, it is then receptive to the pulses of its neighbours. When receiving such a pulse, it will instantly increment its phase by an amount that depends on the current value, $\Delta(\Phi)$ being the phase increment:

$$\Phi \rightarrow \Phi + \Delta(\Phi) \text{ when receiving a pulse.}$$

As shown in [1], "Synchronization of pulse-coupled biological oscillators," by Mirollo and Strogatz, this simple type of interaction leads to synchronization whatever the initial conditions are. To do so, the increment $\Delta(\Phi)$ needs to be chosen based on a function f($\Phi$), where f($\Phi$) needs to be concave down for the oscillators to synchronize [1]. The chosen function is

$$f(\phi) = \frac{1}{b}\ln(1 + [e^b - 1]\phi) \qquad (a)$$

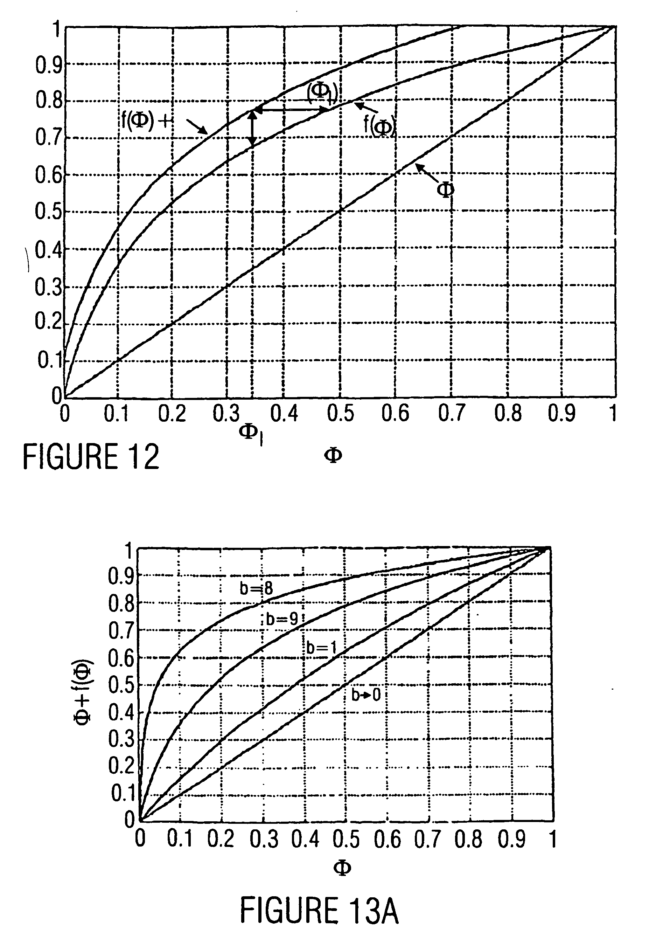

For each oscillator, the function f plays the role of an amplitude. When an oscillator receives a pulse, it raises its amplitude by an amount $\lambda$, $\lambda > 0$. This is equivalent to an increase in phase $\Delta(\Phi)$. Fig. 12 shows how the phase increment $\Delta(\Phi)$ is obtained from the phase response curve for b=3 and $\lambda$=0.1 ($\Phi_{threshold}$ = 1 in this case).

$\Delta(\Phi)$ can be written analytically by the following expression:

$$\phi + \Delta(\phi) = f^{-1}(\min[f(\phi) + \lambda, \phi_{threshold}]) \qquad (b)$$

The function f is parameterized by b, where b > 0 for the function to be concave down. The higher b is, the more concave f($\Phi$) is (the steeper f($\Phi$) is when $\Phi$ is small and flatter when $\Phi$ is close to $\Phi_{threshold}$). Fig. 13a plots this function or the phase response curve according to equation (a) for a few values of b ($\Phi_{threshold}$ = 1 in this case).

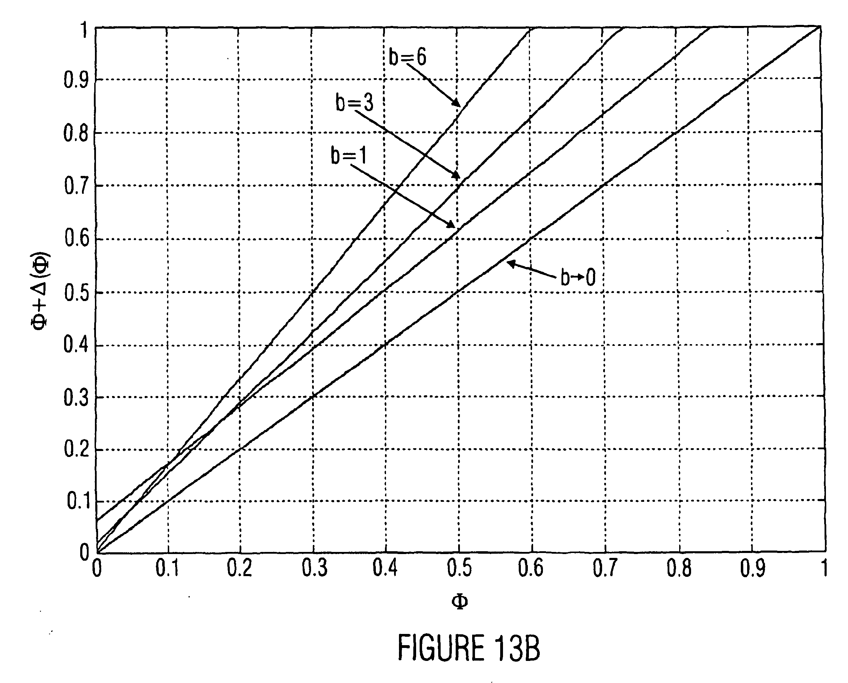

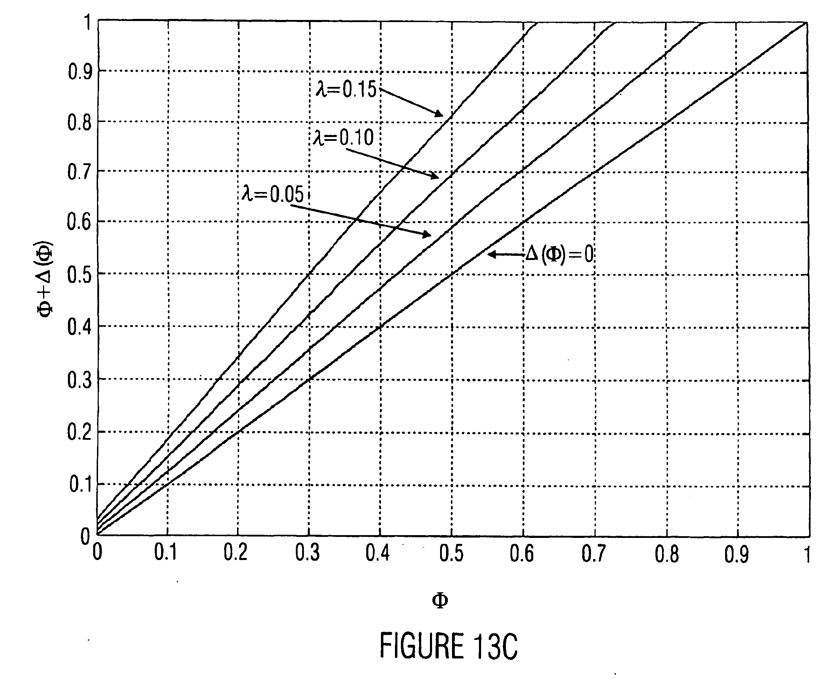

From Fig. 12 it is difficult to see how $\Delta(\Phi)$ evolves as a function of $\Phi$ and the dependency on b or $\lambda$. Fig. 13b plots $\Phi \Delta (\Phi)$ for several values of b, whereas Fig. 13c plots $\Phi + \Delta (\Phi)$ for several values of $\lambda$.

The model explained before describes the simplest mathematical interpretation of pulse-coupled oscillators that leads to synchrony. However, in a wireless environment, this simple model cannot always be directly applied. In the following the issues and wireless effects that occur when considering an application to wireless networks is explained.

The work done by Mirollo and Strogatz, [1], assumes that the coupling between oscillators is uniform and that each node is linked to all the others, i.e. the network is fully meshed. These assumptions are fair in a wireless network when considering a relatively small area.

This model also assumes that there is no delay between transmitting and listening and that a node can receive and transmit simultaneously. As soon as an oscillator fires, all neighbors instantly increment their phases, and may fire immediately. Also the length of the pulse is considered infinitely small, and there is no decoding done by the receiver.

To maintain stability for non-zero propagation delays, $T_{propagation}$, a refractory delay, in the following referred to as sleeping time $T_{sleep}$, is inserted after transmission is completed. The sleeping time $T_{sleep}$ prevents the so called avalanche effect. While the avalanche effect is speeding up synchronization for $T_{propagation}$= 0, the system becomes unstable for $T_{propagation}$> 0, as described in "Time synchronization and reach-back communications with pulse-coupled oscillators for UWB [Ultra Wideband] wireless ad hoc networks," by Y.-W. Hong and A. Scaglione, in IEEE Conference on Ultra Wideband Systems and Technologies 2003, pp. 190-194, November 2003, in the following [7].

From these observations, the wireless effects or four delays need to be taken into account to verify the robustness of the synchronization scheme: a propagation delay $T_{propagation}$, a time taken for a pulse to propagate from the emitting to the receiving node, this time is proportional to the distance between the two nodes, a transmitting delay $T_{transmit}$, a length of the pulse, a decoding delay $T_{decode}$, a time taken by the receiver to decode a pulse and a refractory delay $T_{sleep}$, a time where a receiver is shut-off after transmitting. From these delays, the time during which a node is able to listen to other nodes is reduced from the ideal period when synchronized, here equaling the period of the phase function, T, by the transmitting and sleeping delays. The listening time is therefore defined by

$$T_{\text{listen}} = T - (T_{\text{transmit}} + T_{\text{sleep}})$$

For simulation purposes, it is interesting to model the oscillators with delays by a finite state machine (FSM), describing the state of a node.

Considering an evolution of a single Node, the state machine of the basic model would be very simple. It would simply be two states, a listening one and a transmitting one. A node would go to transmitting state when $\Phi$ reaches $\Phi_{\text{threshold}}$, and it would go back to the listening state immediately.

In the context of wireless networks, the "firing" instant accounts for transmitting a synchronization burst or synchronization signal. The duration of the synchronization burst has been neglected previously. However, its duration may in fact be significant, denoted by $T_{\text{transmit}}$. To model the transmitting delay, the time spent in the transmitting state is simply made equal to $T_{\text{transmit}}$.

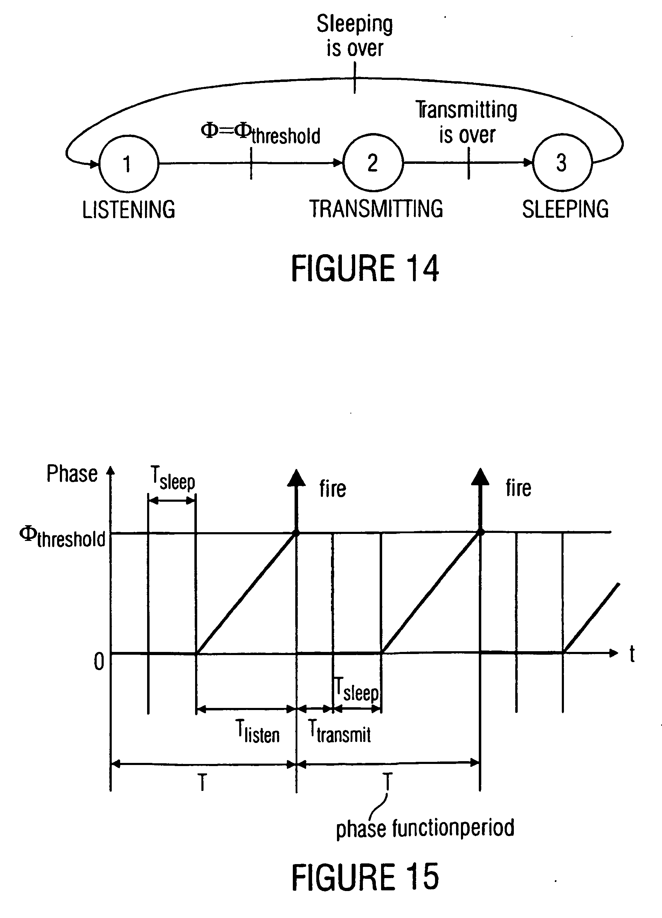

To model the refractory delay, one needs to introduce an additional state. After firing, a node cannot receive immediately during a certain amount of time. As a node cannot receive nor transmit during this period, it can also be seen as a sleeping period. The time spent in this state is proportional to $T_{\text{sleep}}$ or identical to $T_{\text{sleep}}$. Fig. 14 describes the state machine of one node used to simulate these delays. These delays modify the original phase function that is plotted in Fig. 10. Fig. 15 updates the phase function of an isolated node by incorporating delays. As a convention, the phase of an oscillator is set to zero as soon as an oscillator fires. It only starts to linearly increment during $T_{\text{listen}}$, which is equal to $T - (T_{\text{transmit}} + T_{\text{sleep}})$.

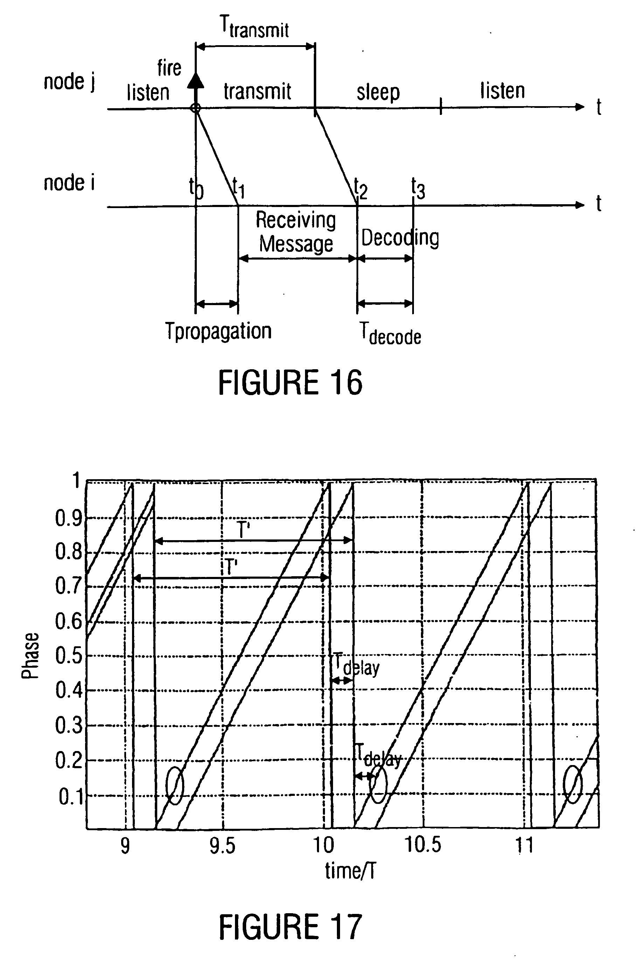

To describe the interaction between two nodes, a simplification can be made by studying the point of view of one node, node i, when another node is firing, node j. Fig. 16 plots the different cases that need to be taken into account to build the state machine describing the point of view of node i when node j is firing. From Fig. 16, there are four time different intervals that need to be studied (before $t_0$, $[t_0,t_1]$, $[t_1, t_2]$, and $[t_2, t_3]$). During each of these intervals, node i can be in either of the states shown in Fig. 14. Hence the complete state machine describing the point of view of node i should require 12 states. However, one is only interested to know how node i is able to completely receive and decode the synchronization burst from node j. Therefore some states will be grouped to form an "Unable to Receive" state, while the states that lead to the successful recovery of the synchronization message will all be described.

Before $t_0$ and after $t_3$, node i is waiting for a message from node j. During this time, node i can be in either state (Listening, Transmitting or Sleeping).

Instant $t_0$ marks the instant when node j fires. For node i, this has no direct incidence. Therefore node i can be in either state.

Instant $t_1$ marks the instant when the message fired by node j reaches node i. At that instant, node i needs to be into listening state to be able to receive the synchronization burst. If between $t_1$ and $t_2$, node i fires, then it will not be able to receive the synchronization message from node j.

Instant $t_2$ marks the instant when the message has been completely received by node i. It now needs to be decoded.

If between $t_2$ and $t_3$, node i fires, then it will not successfully decode the synchronization message. Once the decoding is over, node i can increment its phase by $\Delta(\Phi)$.

As the synchronization in any wireless system is limited by the propagation delay, this section will study and simulate the effects of transmitting, decoding and sleeping delays. To do so, the considered area is taken to be small, so that the propagation delay can be neglected.

The following settings are used for the following simulations: $T_{\text{sampling}} = 0.5\ \mu s$, $T = 100\mu s = 200 \cdot T_{\text{sampling}}$ and N = 30 nodes.

First it is interesting to verify if the system is still able to synchronize despite of the delays that were introduced. Fig. 17 with $T_{\text{transmit}} = 10\mu s$, $T_{\text{sleep}} = 0,5\mu s$, $T_{\text{decode}} = 1\mu s$ and b = 0,2, plots the resulting phases of N nodes after $10 \cdot T$. $T_{\text{sleep}}$ is to be taken to be as small as possible (1 sampling period).

The system does synchronize, but, interestingly, two groups of oscillators form, and their phases are shifted by $T_{\text{delay}}$, where $T_{\text{delay}} = T_{\text{transmit}} + T_{\text{decode}}$. This can be explained by the fact that when the first group fires, the nodes who are receiving at this time will increment their phases only $T_{\text{delay}}$ seconds after the first group. In return, the latter nodes will also fire. This is circled in Fig. 17. This increment occurs $T_{\text{delay}}$ after the second group fires, and it will affect the first group. However, as b is relatively small, the increment is almost negligible. It will, however, slightly increase the phase. As a consequence, the oscillator will fire sooner than expected. The new period is defined as T' (T' < T).

The system seems to be stable only because when the first group receives and decodes the synchronization message from the second group, its phases are very small. And as b is not too strong, the increment is relatively insignificant.

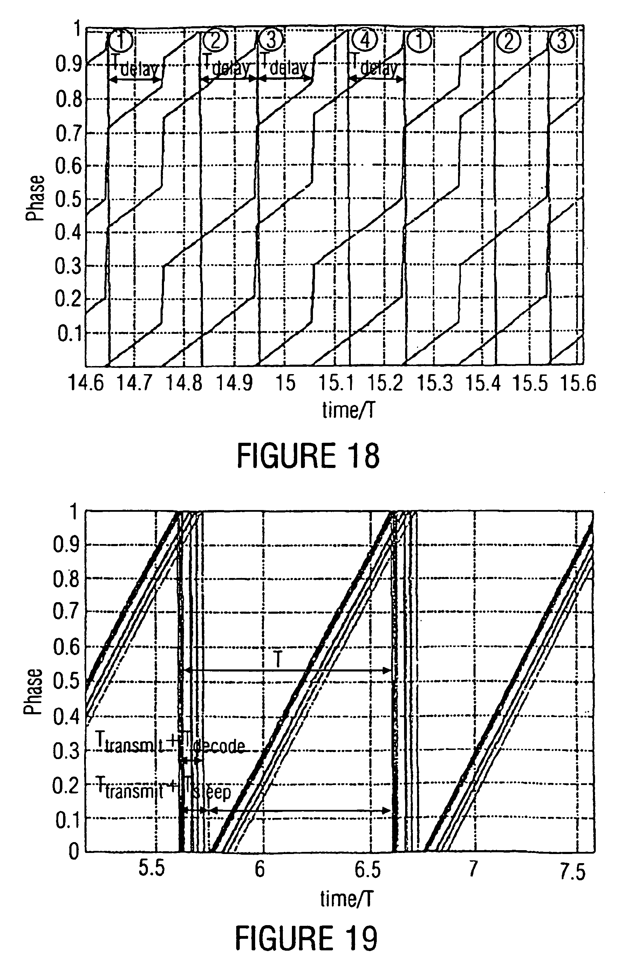

Fig. 18 plots the phases of the N nodes with the same settings as Fig. 17, $T_{\text{transmit}} = 10\mu s$, $T_{\text{sleep}} = 0,5\mu s$, $T_{\text{decode}} = 1\mu s$, except that b = 2. Once again, the system does synchronize, but four distinct groups form in this case.

Generally, it has been observed that with these settings, depending on the number of nodes, N, and the coupling factor, b, three or more groups form. $T_{delay}$ is responsible for the formation of these groups. When Group 1 fires, it causes Group 2 to almost fire. After incrementing its phase, Group 2 fires, which causes Group 3 to fire, which then almost causes Group 4 to fire, which causes Group 1 to fire. And so on. The system that forms is stable over time.

To counter this effect, an oscillator should not be able to listen to the echo of its own fire. This translates to a higher sleeping time. The time during which the firing oscillator cannot listen after firing needs to be at least higher than the time it takes for the receiving oscillator to completely receive the burst and fire a new one immediately. Therefore $T_{transmit} + T_{sleep}$ needs to be at least higher than $T_{transmit} + T_{decode}$. This leads to the following condition

$$T_{sleep} > T_{decode}.$$

This condition assumes that the received synchronization burst will lead receivers to fire immediately. As seen in Fig. 11, this is not always the case. Therefore $T_{sleep}$ should be taken higher than the strict condition. As a rule of thumb,

$$T_{sleep} > 2 \cdot T_{decode}.$$

The following simulation, Fig. 19 with $T_{transmit} = 10\mu s$, $T_{sleep} = 4\mu s$, $T_{decode} = 1\mu s$ and b = 2, was done with $T_{sleep}$ being the only parameter that changed. Synchronization is recovered thanks to the modification of $T_{sleep}$. This is an improvement. However, as it can be seen on Fig. 19, the oscillators fire within a time interval that is equal to $T_{delay}$. Therefore the accuracy of the synchronization is limited by

$$T_{delay} = T_{transmit} + T_{decode}.$$

Looking at the aforementioned it can be said that Mirollo and Strogatz [1] analyzed spontaneous synchronization phenomena and also derived a theoretical framework for the convergence of synchrony. However in a wireless environment, the simple model of [1] cannot always be directly applied. Reference [1] assumes that there is no delay between transmitting and listening and that a node can receive and transmit simultaneously. As soon as an oscillator fires, all neighbors instantly increment their phases, and may fire immediately. Also the length of the pulse is considered infinitely small, and there is no decoding done by the receiver. Finally the time for an oscillator to switch from listening to transmitting and then back is also neglected.

Hong and Scaglione [7] applied the theoretical framework of [1] to wireless sensor networks. In their work the synchronization protocol was modified to better model a wireless communication system. However, the synchronization protocol of [7] still assumes infinitely short pulses. A wireless transmitter may not directly transmit a pulse, rather a sequence or burst is transmitted with duration $T_{transmit}$, significantly exceeding the duration of one sample or pulse, denoted by $T_{sampling}$. For many practical wireless networks, such as wireless LANs, GSM or UMTS, the synchronization burst has a duration of several tens to a few hundred sampling instants $T_{sampling}$. In fact, most synchronization approaches in wireless communications rely on relatively long sequences.

The receiver then collects the impinging signal, for example by a matched filter or correlation detector, which after successful reception will result in a correlation peak. While this correlation peak may be interpreted as a pulse similar to a synchronization pulse, there is an inherent delay of $T_{transmit} \gg T_{sampling}$, between the beginning of the transmission of a synchronization burst and its successful reception (neglecting possible propagation delays for the moment). It was shown that with the solution of [7] the synchronization accuracy cannot be better than $T_{transmit}$. If considering a short range network with a short transmitting pulse, such as UWB systems, the attained accuracy would be sufficient, as $T_{transmit}$ would be negligible [7]. Unfortunately, for many transmission techniques, such as DS-CDMA or OFDM, where the time for one symbol block or synchronization burst, $T_{transmit}$, is up to several hundreds to a few thousands times longer than $T_{sampling}$, such an accuracy is clearly unacceptable.

Therefore, this model was adapted by A. Tyrrell, G. Auer, and C. Bettstetter in "Delay tolerant decentralized time synchronization for wireless networks", in Submitted to IEEE International Conf. on Communications 2006, Sep. 2005, in the following [2], to achieve synchronization in a wireless network where communications through messages of duration $T_{transmit}$ are considered and where some time is required by the receiver to properly decode the message. A node cannot transmit and receive simultaneously. When all members of the network follow the same rules, synchronization is ensured although transmission delays are relatively long. The accuracy of this scheme is limited to the propagation delay.

With this synchronization scheme the nodes will agree on a time scale. However it is not possible to control where the common local timing unit will be compared to a reference timing.

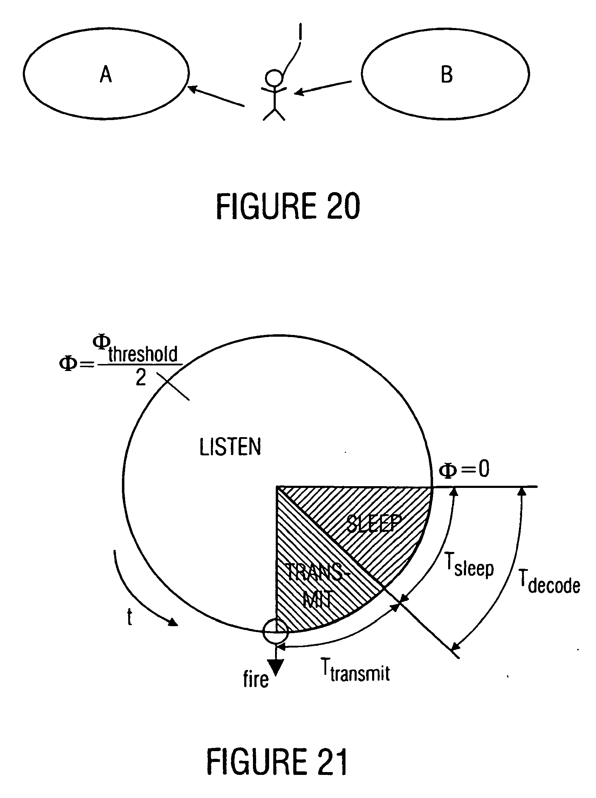

Fig. 20 shows an example where a global reference timing would be useful. Initially the system consists of two disjoint groups A and B that have synchronized separately, but cannot communicate because they are too far from one another. In other words, the nodes or individuals of groups A and B have independently from each other agreed on a local reference timing.

An individual I from B moves now in the direction of A and creates a bridge between the two groups. If these groups do not have the same time reference, then the creation of this bridge will force groups A and B and the individual I to resynchronize and agree on a new reference timing.

As disjoint groups like A and B synchronize independently their local reference timing does typically not match in respect to a common time slot allocation but are typically shifted by time to each other and, thus, also have a different shift by time respective to a global reference timing.

If both groups would have the same global reference timing then the creation of the bridge would not disturb the synchronized state of the groups A and B or the individual I. In the aforementioned scenario both groups A and B and the individual would start resynchronizing. In another scenario, where the individual would move from group B to group A, but where the individual would lose contact of group B, the individual could still cause group A to resynchronize as soon as the individual would be in reach of group A, when the individual I has not the same global reference timing as group A. In realistic scenarios of decentralized mobile networks, where the various individuals forming the various groups will not stay at their position but move from one place to another, thereby potentially forming multiple bridges between multiple groups, one can easily see that resynchronization could occur frequently, thus destabilizing the individual networks and the communication within these networks.

The DE 103 06 788 A1 describes a method for synchronizing the flashing of flashlights. Two control devices and control the flashing of the flashlights via control signals. Both control devices have their own time base, i.e. clocks, which determine the beginning and frequency of the flashing and are connected via a bus with each other. Upon a Lock-signal, both control devices and cause their respective LEDs to flash for a certain duration. According to the method described therein, one of the control devices acts as a master and the other control device act as slave in a master/ slave configuration. The control device acting as master adapts upon reception of the Lock-signal its cycle for transmitting its State-of-Health-Signal (SOH) to the cycle of its control signal. The slave control device then receives, via the bus, the adapted SOH-signal and determines the exact instant the master control device transmitted the control signal based on the known propagation time for the signals on the bus and the instant it received the SOHA signal. Based on this determined instant the slave control device corrects its own clock-based control signals, such that both LEDs flash in synchrony. This is accomplished by slave control device adapting its control signal duration and cycle duration. After the correction, both LED flash, also for later instances at the same time and for the same duration.

Therefore, it is the object of the present invention to provide a solution for imposing a reference timing onto a self-organized network synchronization.

This object is achieved by a network according to claim 1, a method for operating a network according to claim 18, and a computer program according to claim 19.

The present invention provides a network comprising: a reference node adapted to transmit a sequence of synchronization signals, the synchronization signals being separated by time by a synchronization period $T_{sync}$, the synchronization period $T_{sync}$ being predetermined and a synchronization signal having a synchronization signal length $T_{transmit}$; a member node adapted to receive the synchronization signals; to synchronize on the synchronization signals in a step by step manner, a step having an associated synchronization state; and to transmit synchronization signals at time instants, the time instants depending on a synchronization state in an associated step.

Furthermore, the present invention provides a method for operating a network, comprising the following steps: transmitting a sequence of synchronization signals, the synchronization signals being separated by time by a synchronization period $T_{sync}$, the synchronization period $T_{sync}$ being predetermined and the synchronization signal having a synchronization signal length $T_{transmit}$; receiving the synchronization signals; progressively synchronizing on the synchronization signals in a step by step manner, a step having an associated synchronization state; and transmitting synchronization signals at time instants, the time instants depending on a synchronization state in an associated step.

Additionally, the present invention provides a node for a network comprising: a transmitter for transmitting a sequence of synchronisation signals, the synchronization signals being separated by time by a synchronization period $T_{sync}$, the synchronization period $T_{sync}$ being predetermined and a synchronization signal having a synchronization signal length $T_{transmit}$; and a synchronization period changer for changing the synchronization period $T_{sync}$, $T_{sweep}$ for one or more periods.

Additionally, the present invention provides a method for operating a node for a network, comprising the following steps: transmitting a sequence of synchronization signals, the synchronization signals being separated by time by a synchronization period $T_{sync}$, the synchronization period being predetermined and a synchronization signal having a

synchronization signal length $T_{transmit}$; changing a synchronization signal period $T_{sync}$, $T_{sweep}$ for one or more periods.

Finally, the present invention provides a computer program having a program code for performing the inventive methods according to claim 17 or claim 25 when the program runs on a computer.

The invention is based on the finding that if the same global reference timing had been imposed on both groups A and B (Fig. 20) by, for example, service or reference nodes present in A and B then the creation of the bridge would not have disturbed the synchronized state.

An embodiment of an inventive node or reference node transmits periodically synchronization signals, also referred to as synchronization messages, without ever listening and adapting to member nodes being members of a self-organized group. In the following member nodes will also be referred to as normal nodes.

In a first embodiment the inventive reference node simply transmits synchronization signals at the same period as normal nodes, in other words with a period equal to the synchronization period $T_{sync}$, the phase function period T or integer multiples of the synchronization period $T_{sync}$. With this solution already a high global synchronization rate can be achieved, as will be shown later.

If both groups A and B are transmitting simultaneously, normal nodes will not hear synchronization signals of the other group because they cannot listen while transmitting. The width of this "deaf spot" is equal to the synchronization signal length $T_{transmit}$, which represents the limit of the achievable accuracy of the first embodiment of the invention.

Therefore, in a second and preferred embodiment of the present invention the reference nodes can have a slightly shorter period than normal nodes to combat this effect. This way, a situation where two groups A and B were deaf to another will unlock itself progressively.

Preferably, the reference node diminishes its period during a few periods to sweep for nodes that were in its deaf spot. Then it lets the system stabilize by setting its period back to the period of normal oscillators.

Based on the second embodiment of the present invention an accuracy limited only to the propagation delay is gained or regained. Furthermore, the present invention can help regaining synchrony even in difficult topologies of meshed networks. In scenarios, as described in Fig. 20, if both groups A and B already follow a global, i.e. common, reference timing without being connected, the individual, when building the bridge between groups A and group B would not cause a resynchronization of both groups. Both groups A and B would remain stable, i.e. remain in a synchronized state, and a communication between normal nodes of groups A or B would not be disturbed by a resynchronization. At the same time individual I could immediately communicate to both groups A and B without having to resynchronize.

Furthermore, a preferred embodiment of the present invention improves the accuracy of the synchronization by introducing an additional control state, in the following referred to as waiting state or second control state. Thus the transmission of the synchronization signal and accordingly the echo of the own transmission is delayed. This again reduces the negative effect of limited synchronization accuracy caused by the delay.

Thus, an accuracy for synchronizing a member node to another member node can be improved below a delay time $T_{delay}$, which is the synchronization accuracy limit without the waiting state when only a sleeping time after a transmission of the synchronization signal is present. This improved accuracy is obtained independently of a global synchronization unit. In a preferred embodiment of the present invention the waiting time $T_{wait}$ of the second control state is determined by a predetermined synchronization period $T_{sync}$, a synchronization signal length $T_{transmit}$ and a decoding time $T_{decode}$, wherein the synchronization period $T_{sync}$ is a predefined minimum time interval being greater than zero between two synchronization signals of distinct member nodes in a synchronized state.

In an especially preferred embodiment of the invention, a waiting time $T_{wait}$ equals the synchronization period $T_{sync}$ or an positive integer multiple L of the synchronization period $T_{sync}$ reduced by the delay $T_{delay}$, thus taking into account the time span which is needed for transmitting and decoding by the receiver of a member node. This corresponds to a "timing advance strategy", which ensures in an synchronized state, that other member nodes have received and decoded the synchronization signal exactly at that point of time, when their internal signal value equals the threshold value, i.e., after the period T of the phase function. In the following the phase function will also be referred to as first function.

Taking into account certain conditions, which will be explained later, the accuracy of the synchronization can be improved up to a sample duration $T_{sampling}$ and thus providing a possibility to synchronize a member node to another member node, or in other words built a self-organized or decentralized network, such that all nodes adhere to one common time scale, i.e., to define a global time slot structure, in the way that the beginning and the end of a time slot are global and not local parameters. The accuracy of the synchronization is not limited any more by the delay time $T_{delay}$. Thus, the invention can for example also be used for wireless networks, such as wireless LANs, GSM or UMTS, where the synchronization signal length $T_{transmit}$ has a duration of several tenths to a view hundred sampling durations $T_{sampling}$.

Depending on the chosen parameter values, e.g., L, $T_{sync}$, two or more groups of member nodes can be formed in a synchronized state in a way, that each group transmits a synchronization signal with a period of the first function T but all groups considered as unity "seem" to transmit a synchronization signal with a period of $T_{sync}$. Thus in an embodiment, in which for L = 1 for example two groups of member nodes form, the synchronization period $T_{sync}$ defines the predetermined interval in a synchronized state between an instant a first group of member nodes transmits the synchronization signal and the instant a second group of member nodes transmits the synchronization signal, whereas T describes the period of the phase function and thus the interval between two synchronization signals of one group or one single node, whereby the following equation is fulfilled: $T = 2 \cdot T_{sync}$.

With the aforementioned wait and timing advance strategy, which will be explained in more detail later, synchronization of a self organized wireless network can be assured even if the transmitting time $T_{transmit}$ is 50% of the entire frame or burst period or synchronized signal period $T_{sync}$. This is a significant improvement with respect to the solutions as described in [7], where the attainable synchronization accuracy cannot exceed $T_{transmit}$, i.e. if $T_{transmit} = T_{sync}/2$ as described for the prior art example, the synchronization accuracy cannot be better than $T_{sync}/2$.

Thus, a preferred embodiment of the present invention provides a 100% synchronization rate on a global time slot structure while at the same time obtaining a synchronization accuracy which meets the requirements for wireless networks, such as wireless local area networks (WLAN), GSM (Global System for Mobile Communications)or UMTS (Universal Mobile Telecommunication System).

Preferred embodiments of the present invention are described in detail with respect to the following figures, in which:

Fig. 1a      shows an embodiment of an inventive network;

Fig. 1b      shows an embodiment of an inventive reference node;

Fig. 1c      shows the synchronization period of the reference node when it has the same period as a normal oscillator;

Fig. 1d      shows the period of a reference node when it decides to reduce its period;

Fig. 2a      shows an exemplary block diagram of a member node;

Fig. 2b      shows a state machine describing the state of a member node;

Fig. 3      shows a diagram of a timing advance transmit strategy for two periods;

Fig. 4      shows a diagram of an internal signal value of 30 member nodes in synchronized state according to the time advance transmitting strategy with $T_{sync} = 100\mu s$, $T_{transmit} = 20\mu s$, $T_{sleep} = 40\mu s$ and $T_{decode} = 10\mu s$ ;

Fig. 5      shows a diagram of the internal signal values of 30 member nodes with the time advance transmitting strategy during synchronization with $T_{sync} = 100\mu s$, $T_{transmit} = 35\mu s$, $T_{sleep} = 20\mu s$ and $T_{decode} = 35\mu s$;

Fig. 6      shows a diagram of the internal signal values of 30 nodes forming three groups in synchronization with $T_{sync} = 100\mu s$, $T_{transmit} = 20\mu s$, $T_{sleep} = 5\mu s$ and $T_{decode} = 35\mu s$;

Fig. 7      shows a diagram of the internal signal values of 30 nodes without achieving synchronization with $T_{sync} = 100\mu s$, $T_{transmit} = 35\mu s$, $T_{sleep} = 60\mu s$ and $T_{decode} = 35\mu s$ ;

Fig. 8      shows a diagram of exemplary stability limits of 30 nodes with $T_{sync} = 100\mu s$, $T_{decode} = 35\mu s$ and b = 3;

Fig. 9      shows a diagram of an exemplary synchronization rate of 30 nodes with $T_{sync} = 100\mu s$, $T_{decode} = 35\mu s$, $T_{transmit} = 0.5\mu s$ and b = 3;

Fig. 10      shows a diagram of a phase of an isolated node without delay;

Fig. 11      shows the diagrams of the phases of two pulse-coupled oscillators during synchronization;

Fig. 12      shows a diagram of a possible phase response curve or second function and a phase increment;

Fig. 13a      shows a diagram of possible graphs of a phase response curve or second function;

Fig. 13b      shows a diagram of $\Phi + \Delta(\Phi)$ for several values of b;

Fig. 13c      shows a diagram of $\Phi + \Delta(\Phi)$ for several values of $\lambda$;

Fig. 14      shows an exemplary diagram of a state machine describing the state of a node with delays;

Fig. 15    shows a diagram of a possible phase function of an isolated oscillator with delays;

Fig. 16    shows a diagram of the control states describing the point of view of a node i when a node j is firing;

Fig. 17    shows a diagram of the internal signal values of 30 prior art nodes with $T_{sync}$ = 100μs, $T_{sleep}$ = 0.5μs, $T_{decode}$ = 1μs and b = 0.2;

Fig. 18    shows a diagram of the internal signal values of 30 prior art oscillators with $T_{sync}$ = 100μs, $T_{transmit}$ = 100μs, $T_{sleep}$= 0.5μs, $T_{decode}$ = 1μs and b = 2;

Fig. 19    shows a diagram of the internal signal values of 30 prior art oscillators with $T_{sync}$ = 100μs, $T_{transmit}$ = 10μs, $T_{sleep}$ = 4μs, $T_{decode}$ = 1μs and b = 2.

Fig. 20    shows the merging of two synchronized groups through one link;

Fig. 21    shows a pie chart representation of the states of an oscillator with delays;

Fig. 22    shows a pie chart representation of the state space with the time advance strategy, two groups of oscillators form, spaced exactly $T_{sync}$ apart;

Fig. 23    shows a diagram of an internal signal value for a network with regained accuracy through the time advance strategy;

Fig. 24    shows a table with synchronization results when directly using reference nodes;

Fig. 25    shows a diagram of internal signal values of 30 nodes with unsynchronized phases when one node imposes a reference;

Fig. 26    shows a diagram about the deafness between reference nodes and normal nodes;

Fig. 27    shows a diagram explaining the global sweep and stabilize strategy;

Fig. 28    shows a diagram of a network with 30 normal nodes and 4 reference nodes;

Fig. 29    shows a diagram of a synchrony rate in a network according to Fig. 8 with several reference nodes.

Before embodiments of the present invention are described in detail, the following corresponding terms are introduced. A member node is also referred to as normal node, as pulse-coupled oscillator or as integrate-and-fire-oscillator. Phase Φ is also referred to as internal signal value, $\Phi_{threshold}$ is also referred to as threshold value, the phase function is also referred to as first function and the phase response curve $\Delta(\Phi)$ is also referred to as second function. A listening state is also referred to as first control state, a waiting state is also referred to as second state, a transmitting state is also referred to as third state and a sleeping state is also referred to as fourth state. The term node refers to an oscillator or generally to a transmit or receive device. The term receiving node is also referred to as receiver and the term transmitter is also referred to as transmitting node.

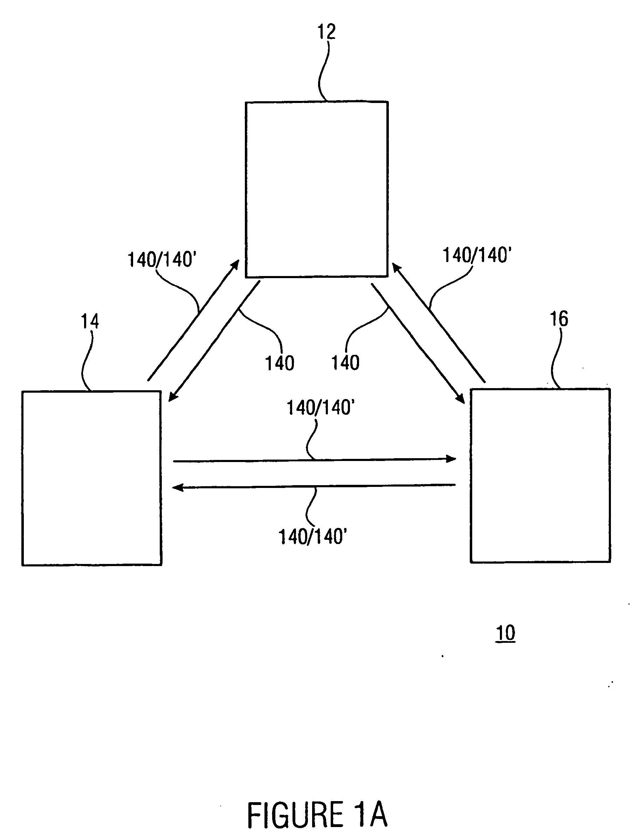

Fig. 1a shows an embodiment of an inventive network 10, comprising a reference node 12, a member node 14 and another member node 16. The reference node 12 is operative to transmit a sequence of synchronization signals 140, for example, to the member node 14 and the another member node 16. The synchronization signals 140 are separated by time by a synchronization period $T_{sync}$ or integer multiples thereof, wherein the synchronization period is predetermined and wherein the synchronization signal has a synchronization signal length. The member node 14 and the another member node 16 can be operative to transmit, to receive or to transmit and receive sequences of synchronization signals 140, but are only operative to either transmit or receive at the same time.

The member nodes 14, 16 can transmit synchronization signals 140 which are in synchrony with the synchronization signals 140 of the reference node 12, i.e. adhere to the same absolute time schedule, or can transmit synchronization signals 140' which are shifted by time, i.e. which are offset, respective to the synchronization signals 140 of the reference node 12.

The reference node can also be adapted to receive synchronization signals 140, 140', for example to monitor and detect whether there are member nodes 14, 16 transmitting synchronization signals 140' which are offset from the reference node's 12 synchronization signals 140.

The member node (14) and the additional member node (16) are adapted to communicate with each other within a synchronization schedule, i.e. the global reference timing, determined by the sequence of synchronization signals (140) generated by the reference node (12).

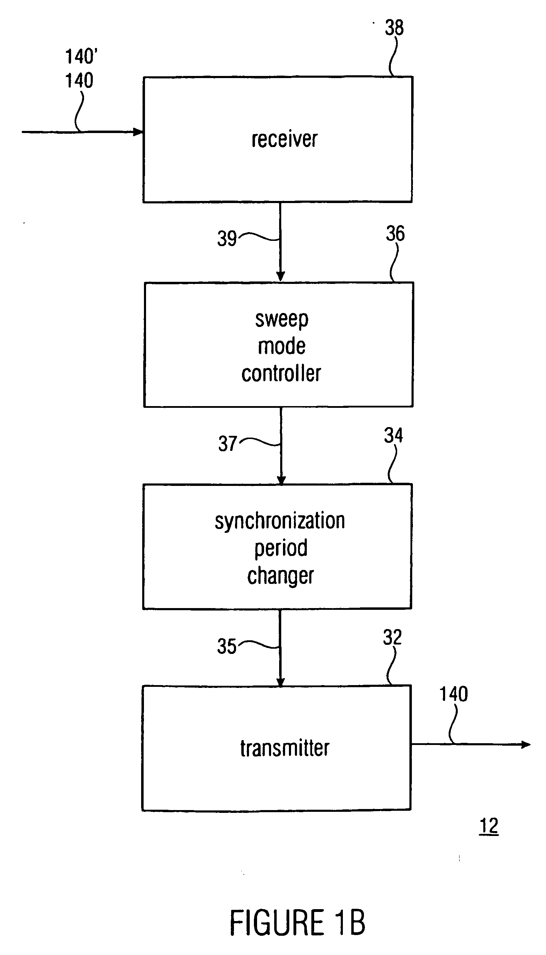

Fig. 1b shows an embodiment of an inventive node 12 or reference node 12 for the inventive network 10. The node 12 comprises a transmitter 32, a synchronization period changer 34, a sweep mode controller 36 and a receiver 38. The transmitter 32 is operative to transmit a sequence of synchronization signals 140, the synchronization signals being separated by time by a synchronization period or integer multiple thereof, the synchronization period being predetermined and a synchronization signal 140 having a synchronization signal length. The synchronization period changer 34 is operative to change the synchronization period for one or more periods by sending a change signal 35 to the transmitter 34. The sweep mode controller 36 is operative to control the synchronization period changer 34 through the control signal 37. The sweep mode controller 36 is operative to detect an event and to activate the synchronization period changer 34 by control signal 37 based on such detected event. The detected event can be a predefined elapsed time or any other node internal event. Alternatively, as shown in Fig. 1b, the sweep mode controller 36 is operative to monitor, for example through a receiver 38, whether there exist synchronization signals 140' in the network, which are not synchronized or offset from the synchronization signal 140 transmitted by the transmitter 32 of the node 12. In other words, the receiver 38 can be operative to receive synchronization signals 140, 140' from other nodes and to send a receive signal 39 to the sweep mode controller 36. Based on the receive signal 39 the sweep mode controller 36 is then capable of detecting offset synchronization signals 140' among the synchronization signals 140, 140'. The synchronization signals 140' are not synchronized with the node's 12 synchronize signals 140, but may be synchronized with other nodes' synchronization signals 140'. The synchronization signals 140' are shifted in time (offset) respective to the node's 12 synchronization signals 140 and thus, do not use the same time slot allocation respective to the global, absolute time instant.

The inventive node can be a reference node (12), wherein the reference node (12) compared to an inventive node can be operative to only have a limited reception capability for receiving information concerning the predetermined synchronization period $T_{sync}$, and can be operative, furthermore, to not have the capability to communicate with the member node (14) by transmitting useful information to or receiving useful information from the member node (14).

Alternative embodiments of reference nodes 12 can be adapted to transmit useful information, and to receive information, for example, in case the sweep mode controller 36 depends on external information.

Further embodiments of the invention are adapted such, that member nodes 14, 16 can be assigned or assign themselves to be reference nodes 12 and then go into the sweep state and can, furthermore, be adapted to change back into member nodes once, for example, synchronization of all nodes to the reference timing has been achieved.

The global timing can be provided for the reference nodes, for example, by primary reference clocks as used in telecommunication networks, by GPS (Global Positioning System) or atomic clocks like the German DCF77 or the International Atomic Time (TAI).

The sweep mode controller 36 is, furthermore, operative to monitor whether the time offset is different from the synchronization period or multiples thereof. The detection of such an offset synchronization signal 140' is one possible event upon which the sweep mode controller 36 activates the synchronization period changer 34.

Furthermore, the sweep mode controller 36 is operative to detect whether the time offset is higher than a minimum threshold determined by a general synchronization uncertainty or synchronization accuracy limit. In case, the time offset is below or equal to the minimum threshold, the sweep mode controller 36 will not consider this as an event to activate the synchronization period changer 34. The minimum threshold can, for example, be defined by the aforementioned sampling time.

The synchronization period changer 34 is operative to increase or reduce the synchronization period, in a preferred embodiment of the node 12, the synchronization period changer 34 is operative to reduce the synchronization period.

The most simple implementation of an inventive node 12, is to only provide a transmitter 32, transmitting the sequence of synchronization signals 140 at the predetermined synchronization period without changing it.

In another embodiment of the inventive node 30, the sweep mode controller 36 only uses internal events, for example, elapsed times. Therefore, one exemplary another embodiment comprises a sweep mode controller which activates the synchronization period changer 34 every hour. Therefore, embodiments of the inventive node can be produced at low cost.

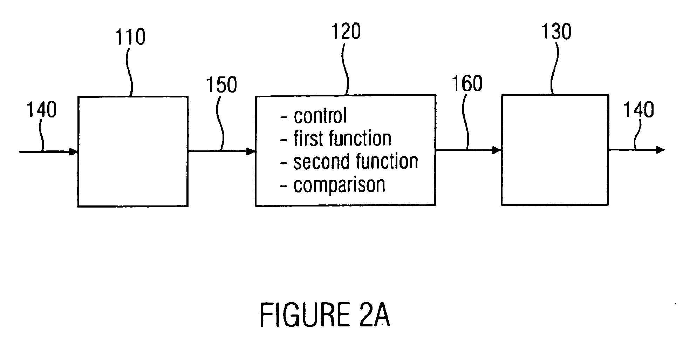

Fig. 2a shows another embodiment of a node, for example, a member node, comprising a receiver 110, a processing unit 120 and a transmitter 130. The processing unit 120 is implemented to control the receiver 110 and the transmitter 130, for example to change from one control state to another control state. The processing unit 120 increases an internal signal value or a phase, according to a first function or a phase function, being in a first control state. Being in the first control state 1 the receiver 110 is ready to receive a synchronization signal 140 from another node, to decode the synchronization signal 140 and after successful reception or detection of the synchronization signal to send a detection signal 150 to the processing unit. A detection of the synchronization signal can be performed for example by a matched filter or correlation detector with the correlation peak being for example the detection signal 150. The processing unit 120 is also implemented to modify the internal signal value according to the second function, for example a phase response curve or coupling function, upon reception of the detection signal 150 being in control state 1. The processing unit is further implemented to compare the internal signal value with a given threshold value, for example $\Phi_{threshold}$, and as soon as the internal signal value equals the threshold value, to change, for example, to the second control state and at the same time being able to control the receiver 110 and the transmitter 130 to change to the second control state, too. The receiver 110, the processing unit 120 and the transmitter 130 will remain for a waiting time in the second control state, wherein the waiting time is greater than zero and smaller than a period of the first function. After the waiting time is over, the processing unit 120 will change to the third control state and can control the receiver 110 and the transmitter 130 to change to the third control state, too. At the same time the processing unit 120 will send a generation signal 160 to the transmitter 130 and the transmitter will transmit a synchronization signal 140 immediately upon reception of the generation signal 160.

Fig. 2a shows just one possible embodiment of a node or member node, the node can of course be implemented in a way, that for example the receiver 110, the processing unit 120 and the transmitter 130 are integrated into one single unit.

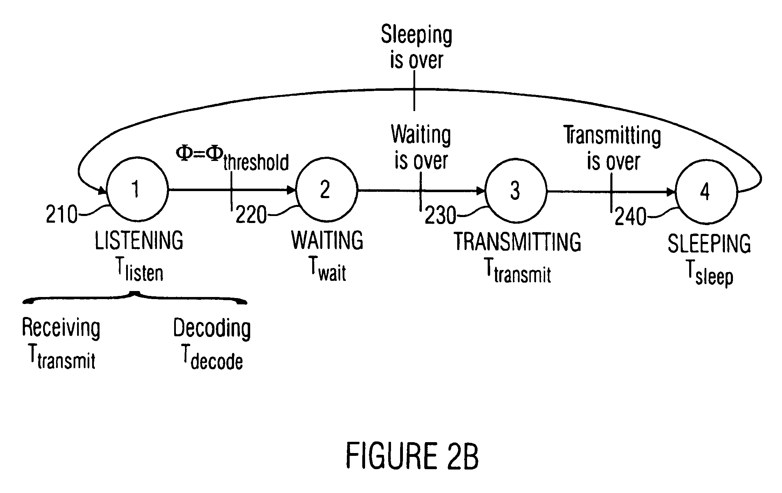

Fig. 2b shows a state machine describing an embodiment of the node with the additional control state or waiting state. The state machine comprises a first control state 210 or listening state, a second control state 220 or waiting state, a third control state 230 or transmitting state and a fourth control state 240 or sleeping state. When $\Phi$ equals $\Phi_{threshold}$ the node is implemented to change from the listening state 210 to the waiting state 220. When the waiting is over, for example after a waiting time $T_{wait}$, the node is implemented to change from the waiting state 220 to the transmitting state 230. After transmitting is over, for example after a transmitting time or synchronization signal length $T_{transmit}$ being greater than zero and smaller than the period of the phase function $T$, the embodiment of the node is implemented to change from the transmitting state 230 to the sleeping state 240. After sleeping is over, e.g. after a sleeping time $T_{sleep}$ being greater than zero and smaller than the period of the phase function $T$, the node is implemented to change from the sleeping state 240 to the listening state 210. As described before, the node being in the listening state 210 is ready to receive and decode the synchronization signal 140, wherein the time to receive a complete synchronization signal 140 is defined by the synchronization signal length $T_{transmit}$ and the time for decoding the synchronization signal is defined by the decoding time $T_{decode}$, both being larger than zero and smaller than the period of the phase function $T$. For the node to be able to successfully receive and decode a synchronization signal the listening time $T_{listen}$ of the listening state 210 has to be larger than the sum of the synchronization signal length $T_{transmit}$ and the decoding time $T_{decode}$. For the implementation of the node concerning the waiting state 220, different concepts are possible, e.g. the node may either be "shut down", i.e. the phase is not increased over time according to the phase function nor is the receiver ready to receive and decode a synchronization signal, or the node may be in a similar state to the listening state 210, but with a refractory interval at the beginning of the waiting state 220, as it will be explained later.

Even if Fig. 2b shows a state machine with four control states, embodiments of the node are not limited to four control states, e.g., a different embodiment of the node could only comprise three states, without the sleeping state 240, thus changing from the transmitting state 230 directly to the listening state 210.

In the following, the waiting state and the transmitting state are also referred to as fire states as these describe states where the node "fired" and either transmits immediately, refer to Fig. 14, or waits a waiting time before transmitting, refer to Fig. 2b.

Additional information like $T_{listen}$, $T_{wait}$, $T_{transmit}$, $T_{sleep}$, $T_{transmit}$ or $T_{decode}$ have been integrated into Fig. 2b for an easier understanding of the relation of the different timings and control states. For example $T_{listen}$ may on one hand be referred to as a predefined time and on the other hand referred to as an effective time, for which the node will remain in the listening state 210, for example during synchronization, as a successful reception and decoding of a synchronization signal can lead to an earlier reach of the threshold value.

As seen based on Fig. 19, the accuracy of the synchronization is limited by $T_{delay}$, which is equal to

$$T_{delay} = T_{propagation} + T_{transmit} + T_{decode}.$$

If considering a short range network with a short transmitting pulse, such as UWB systems, then the basic model would fit well, as $T_{delay}$ would be negligible [7]. However, if considering a wider range wireless network that uses longer transmitting bursts, then delays are disastrous for this synchronization scheme. For example, with a system using a sampling time of 5ns, if the length of a burst is 20μs, then $T_{transmit}$ equals 4000 samples. The accuracy of the timing synchronization would be at least equal to 4000 samples, which is clearly not acceptable.

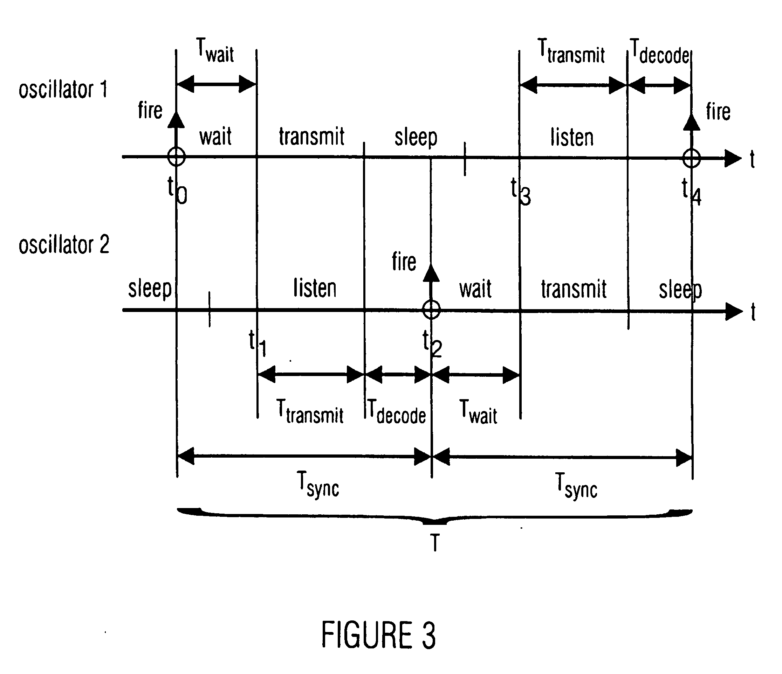

One strategy to combat this effect is for the transmitter to delay its transmission for a time equal to $T_{wait} = T_{sync} - (T_{transmit} + T_{decode})$, where $T_{sync}$ is the synchronized signal period. With this approach, the receiver or the receiving node would increment its phase exactly $T_{sync}$ seconds after the transmitter has "fired". The term "fire" hereby does not refer anymore to an instant of the "transmission" itself as defined before, but refers now to the time, when the phase reached the threshold value. Thus, the node is rather "fire-ready" when the phase reaches the threshold value and still has to wait the waiting time before transmitting the synchronization signal 140. This will be discussed in the following based on Fig. 3.

Fig. 3 sums up this strategy, in the following also referred to as the timing advance transmit strategy, for two nodes that are already synchronized. At instant $t_0$, oscillator 1 reaches $\Phi_{threshold}$. It waits until $t_1 = t_0 + T_{wait}$ before starting to transmit a synchronization burst. At $t_2$, oscillator 2 has successfully received and decoded the burst. As the two oscillators are already synchronized, it will follow the same scheme as oscillator 1, and wait until $t_3 = t_2 + T_{wait}$ before transmitting.

Generally a transmitter could wait for a time equal to $T_{wait} = L\, T_{sync} - (T_{transmit} + T_{decode})$, with L being an integer number. In the following, the case L = 1 is explained in more detail.

This scheme will only work if two conditions are met. First of all, $T_{transmit} + T_{decode}$ cannot be larger than $T_{sync}$. Otherwise the waiting time would be negative, and L should be adjusted. This leads to the following condition

$$T_{transmit} + T_{decode} < T_{sync} \qquad\qquad (c)$$

Another condition for the scheme to have a chance to successfully synchronize is, that at instant $t_3$ in Fig. 3, oscillator 1 needs to be in listening state to receive the burst of oscillator 2. Therefore the time between to and end of the sleeping state needs to be smaller than $T_{sync} + T_{wait}$. This imposes the condition $T_{wait} + T_{transmit} + T_{sleep} < T_{sync} + T_{wait}$, which simplifies to

$$T_{transmit} + T_{sleep} < T_{sync} \qquad\qquad (d)$$

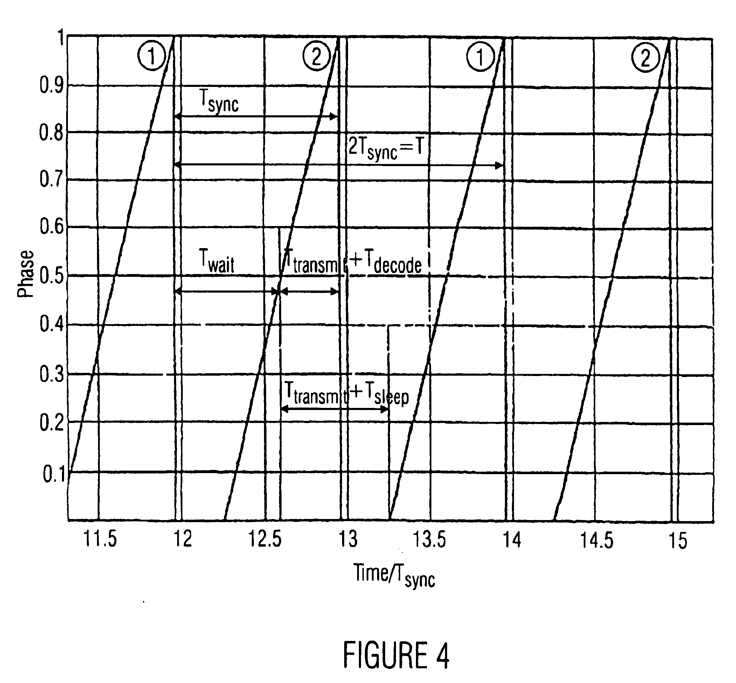

Once these conditions are met, two groups should form. Group 2 synchronizes thanks to the synchronization message of Group 1, and vice versa. Fig. 4 plots the resulting phases of 30 nodes that successfully synchronize using the Time Advance Synchronization scheme for $T_{sync} = 100\mu s$, $T_{transmit} = 20\mu s$, $T_{sleep} = 40\mu s$, $T_{decode} = 10\mu s$ and b = 3. For simplification purposes, the considered cell containing all nodes is small ($T_{propagation} = 0$ between all nodes).

Based on the timing advance strategy, the finite state machine described before is slightly modified.

On the state machine describing the state of one node, a waiting state is added before the transmitting state. A transmitter will stay in this state for a waiting time equal to $T_{wait}$, as indicated in Fig. 2b.

To verify the validity of the time advance transmitting strategy, it is simulated under idealized conditions. Hence the following results were obtained under these assumptions: $T_{sampling} = 0,5\mu s$, $T_{sync} = 100\mu s = 200 T_{sampling}$, noise is ignored, i.e. a very high Signal to Noise Ratio (SNR) assumed, coupling is fixed with parameters b = 3 (see Fig. 13), N = 30 nodes, nodes form a fully meshed network, and are uniformly distributed over an area of 50 meters by 50 meters (to simulate the propagation delay).

In this case, the maximum distance between two nodes is $d_{max} = 50 \cdot \sqrt{2}m$, and the maximum propagation delay is $\frac{d_{max}}{c} = 0.23 < T_{sampling}$ . Therefore the propagation delay is equal to zero samples between all nodes.

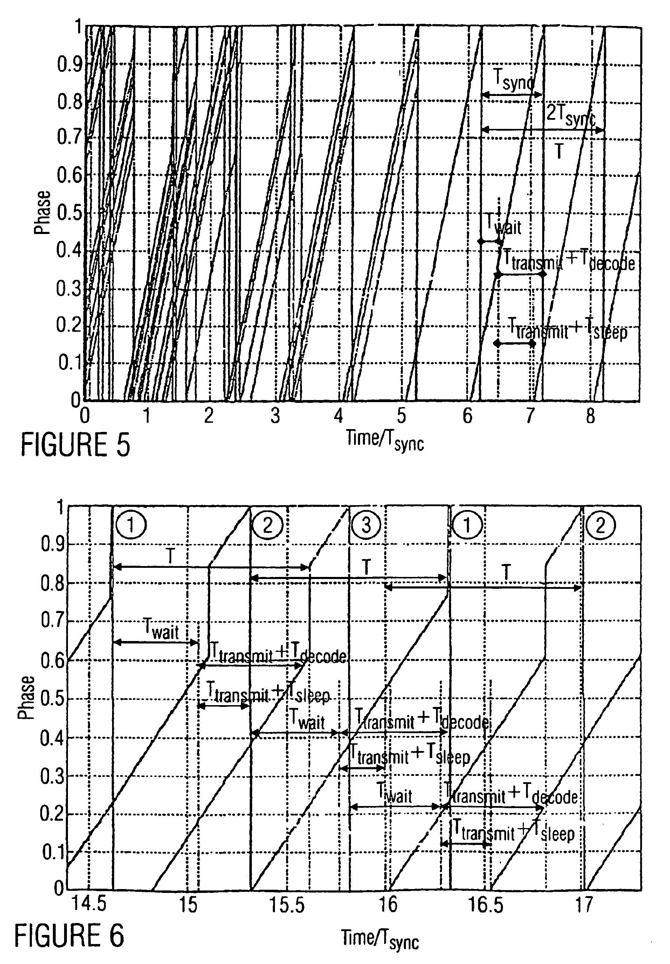

Fig. 5 shows that for $T_{transmit} = 35\mu s$, $T_{sleep} = 20\mu s$, $T_{decode} = 35\mu s$, even though $T_{delay} = T_{transmit} + T_{decode} = 70\mu s$, synchrony between the 30 nodes is achieved within $5.5T_{sync}$. The accuracy is now not limited by $T_{delay}$.

Using different settings, synchrony is not always obtained. For example, if $T_{transmit}$ is decreased from $35\mu s$ to $20\mu s$ and $T_{sleep}$ is decreased from $20\mu s$ to $5\mu s$, a different type of synchrony can be obtained with a system where three or more distinctive groups form. Fig. 6 shows for $T_{transmit} = 20\mu s$, $T_{sleep} = 5\mu s$, $T_{decode} = 35\mu s$ this synchrony with three groups. This type of synchrony is reminiscent of a case shown before, Group 1 influences Group 3, which influences Group 2, which influences Group 1.

As it was shown before, this type of synchrony occurred because $^T$sleep was too small ($T_{listen}$ was too high). With the new transmit strategy, $T_{listen} = 2 \cdot T_{sync} - (T_{wait} + T_{transmit} + T_{sleep})$, as $T_{wait} = T_{sync} - (T_{transmit} + T_{decode})$,

$$T_{listen} = T_{sync} + T_{decode} - T_{sleep} \qquad\qquad (e)$$

To change the listening time, $T_{sleep}$ is the only parameter that needs to be modified. To avoid the wrong type of synchrony that is shown on Fig. 6, $T_{sleep}$ needs to be increased.

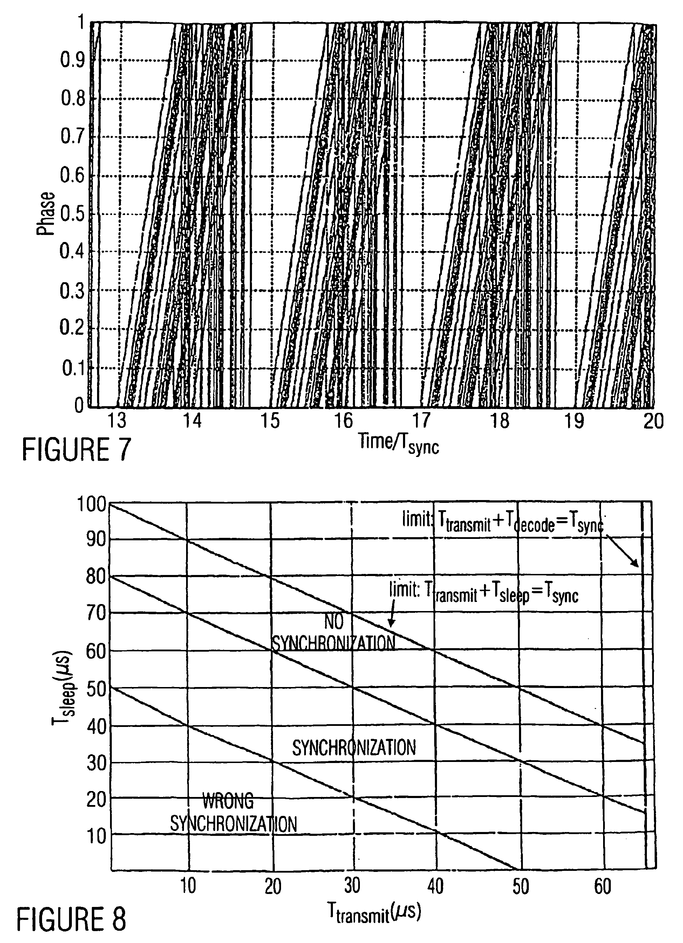

If the sleeping time $T_{sleep}$ is too high, no synchronization at all is obtained. Fig. 7 shows for $T_{transmit} = 35\mu s$, $T_{sleep} = 60\mu s$ and $T_{decode} = 35\mu s$ the evolution of the 30 nodes in this case.

In this case, the sum $T_{transmit} + T_{sleep} = T_{delay}$ is too close to the limit given by (d). The listening time is too small, and the probability for the system to synchronize is too small as well. Therefore $T_{sleep}$ cannot be too high.

These three distinct cases lead to the question of finding when synchrony is always assured. By running simulations for $T_{sync} = 100\mu s$, $T_{decode} = 35\mu s$, b = 3 with different settings, Fig. 8 was obtained. It presents three distinct areas. On the bottom left corner, synchrony with more than two distinct groups is obtained (see Fig. 6). In the middle area, perfect synchrony is obtained (see Fig. 5). And in the top right hand corner, no synchrony is achieved (see Fig. 7).

These limits were obtained by running 100 simulations with the same settings. The rate of synchrony had to be more than 90% to declare the area "SYNCHRONIZATION".

From Fig. 8, as long as $T_{transmit} < 50\mu s$, $T_{sleep}$ can be chosen from a range of 30% of the period time $T_{sync}$ to achieve synchrony. For $50\mu s < T_{transmit} < 65\mu s$ synchronization is possible, but the range for $T_{sleep}$ is smaller.

The limits on Fig. 8 were obtained for a synchronization rate of 90%. This leads to finding out how the rate of synchronization evolves as a function of the sleeping time for a fixed transmitting time.

There is a direct correspondence between the sleeping time, $T_{sleep}$, and the listening time, $T_{listen}$, see equation (e). It is more interesting to view the evolution of the synchronization rate as a function of the listening time.

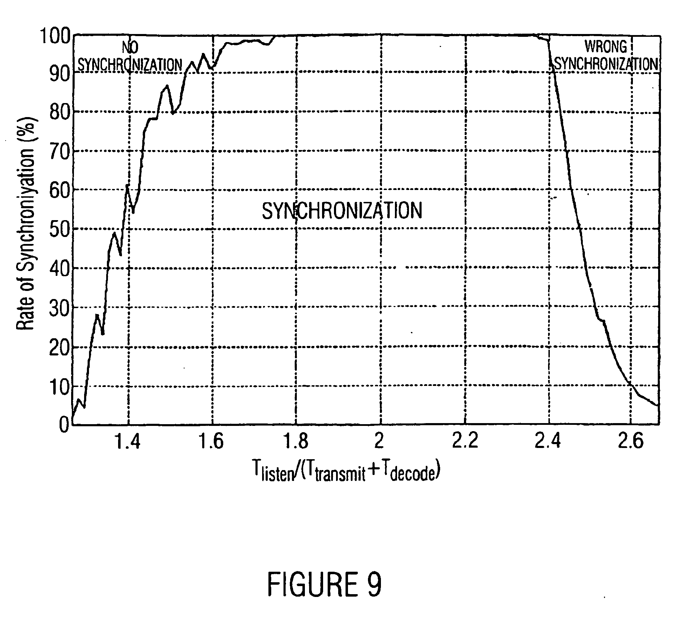

Fig. 9 was obtained by running 1000 simulations for $T_{sync} = 100\mu s$, $T_{decode} = 35\mu s$, $T_{transmit} = 0,5\mu s$, b = 3for each settings to measure the synchronization rate.

Fig. 9 helps to understand the different synchronization phases. When $T_{listen}$ is too small ($T_{listen}$ needs to be at least equal to $T_{transmit} + T_{decode}$), no synchronization occurs and each node freely oscillates without hearing the other nodes. Progressively, as $T_{listen}$ raises, nodes are more likely to hear one another and the synchronization rate raises rapidly. For a range that is roughly $0.30 \, T_{sync}$ wide, synchronization will occur. Then, suddenly this rate will rapidly decrement as $T_{listen}$ is too large. In this case, nodes hear too many discordant messages, and a wrong type of synchrony is achieved where more than two groups form.

Summarizing the aforementioned, based on the timing advance strategy, a synchronization of nodes in self-organized wireless networks can be assured even if the transmitting time $T_{transmit}$ is 50% of the entire frame or burst period $T_{sync}$. However, referring to Fig. 20, the nodes of each separate group A or B align on or agree on a local synchronization scheme, both having a synchronization period $T_{sync}$, but most probably being shifted by time compared to each other. Thus, no global time slot allocation for all different groups is achieved. It is also not possible to control where the groups' local timing will be compared to a global reference timing. Trying to impose a reference timing onto a network that follows these rules can help controlling this instant, and can solve inherent difficulties of self-organized systems.

In the following the models for describing the synchronization of pulse coupled oscillators and network nodes derived thereof are reviewed and further developed for a better understanding of the invention.

Based only on the phase function described previously, 2 or N identical oscillators are able to synchronize their firing instant within a few periods. To achieve this, an oscillator modifies its phase when receiving a pulse from another integrate-and-fire oscillator.

When coupled to others, an oscillator is receptive to the pulses of its neighbors. When receiving such a pulse, it will instantly increment its phase by an amount that depends on the current value:

$$\phi \to \phi + \Delta\phi \quad \text{when receiving a pulse}$$

$\Delta\phi$ is determined by the Phase Response Curve (PRC), which was chosen to be linear in [1]:

$$\phi + \Delta\phi = \min\left(\alpha \cdot \phi + \beta, 1\right) \quad \text{with} \quad \begin{cases} \alpha = \exp(b \cdot \varepsilon) \\ \beta = \dfrac{\exp(b \cdot \varepsilon) - 1}{\exp(b) - 1} \end{cases} \quad (1)$$

wherein *b* is the dissipation factor and $\varepsilon$ is the amplitude increment. Both factors determine the coupling between oscillators. The threshold $\phi_{threshold}$ is normalized to one.

Fig. 13b plots $\phi + \Delta(\phi)$ for several values of *b* and for $\varepsilon = 0,1$.

It was shown in [1] that if the network is fully meshed, the system always converges, i.e. all oscillator will fire as one, for $b > 0$ and $\varepsilon > 0$ . The time to synchrony is inversely proportional to the product $b \cdot \varepsilon$.

This model, as explained previously, presents the simplest mathematical interpretation of pulse-coupled oscillators that leads to synchrony. However in a wireless environment, this simple model cannot always be directly applied. In the following, it will be explained which issues occur.

The work done by Mirollo and Strogatz [1] assumes that the coupling between oscillators is uniform and that each node is linked to all the others, i.e. the network is fully meshed. These assumptions are fair in a wireless network when considering a relatively small area.

It is also assumed that communication is done through pulses and that a pulse is instantly received and decoded by other oscillators. In a wireless environment solitary pulses are hardly used alone as they are virtually impossible to detect.

More realistically a sequence of pulses or a burst of length $T_{transmit}$, also referred to as synchronization signal length $T_{transmit}$ is to be considered for the synchronization scheme.

During this time a transmitter is not able to receive. Once transmitted, this message will not be instantly received as some propagation delay, denoted $T_{propagation}$, occurs. After the message has propagated and been received, some processing time is required to correctly declare that a synchronization message has been received. This results in a decoding delay $T_{decode}$.

A system of oscillators can become unstable if the firing of a node causes other nodes to fire, which cause more nodes to fire, and so on. This avalanche effect can be avoided by introducing a refractory period after transmitting , as described by Y.-W. Hong, B. Sikeci, and A. Scaglioine in "Swarming activities to distribute information in large sensor networks," in Proc. MILCOM Conference, Boston, MA, pp. 682-687, Oct. 2003, in the following [6], where the receiver is shut-off and therefore cannot receive synchronization messages during a time equal to $T_{refr}$.

The time taken by a node to completely receive and decode a synchronization message is changed. It now requires $(T_{transmit} + T_{decode})$. This delay is the most significant difference from the Mirollo and Strogatz model, which assumes no propagation delay, an infinitely short transmission time and no decoding delay [1]. The total delay is defined by:

$$T_{delay} = T_{propagation} + T_{transmit} + T_{decode} \qquad (2)$$

To take into account this latency, a receiver should not immediately start incrementing its phase after the refractory period. Instead, it should switch on its receiver but not increment its phase during $T_{lat}$.

For convenience, the refractory and latency delays are grouped to form a sleeping delay, where the phase remains equal to zero and the receiver is off during $T_{refr}$ and on during $T_{lat}$. The sleeping delay is equal to $T_{sleep} = T_{refr} + T_{lat}$.

From these observations four delays need to be taken into account to verify the robustness of the synchronization scheme: a propagation delay $T_{propagation}$, a time taken for a pulse to propagate from the emitting to the receiving node, this time is proportional to the distance between the two nodes, a transmitting delay $T_{transmit}$, a length of the pulse also referred to as synchronization signal length, a decoding delay $T_{decode}$, a time taken by the receiver to decode a pulse or synchronization signal and a sleeping delay $T_{sleep}$, a time necessary after transmitting to maintain stability and to account for the latency of a synchronization message.

From these delays, the time during which a node is able to listen to other nodes is reduced from the ideal period when synchronized, T, by the transmitting and sleeping delays. The listening time is therefore defined by:

$$T_{listen} = T - T_{delay} = T - (T_{transmit} + T_{sleep}) \qquad (3)$$

Fig. 21 plots a new pie representation of the different states of an oscillator without timing advance strategy. One full rotation corresponds to an oscillation of period T, also referred to as phase function period T. $T_{propagation}$ is considered negligible.

From this representation, when a node starts transmitting, all nodes that are transmitting or sleeping will not be able to receive this message. To summarize, if the firing instants of two nodes are spaced by less than $T_{transmit} + T_{refr}$, they will not be able to interact. This is contradictory to the fact that when a system synchronizes, the distance between firings tends to zero. Therefore a "blind spot" of width $T_{ransmit} + T_{refr}$ appears and limits the accuracy of the synchronization scheme.

If neglecting $T_{propagation}$, an oscillator that fires can cause a second oscillator to fire only after $T_{delay}$. To maintain the system stable, the first oscillator should not be able to receive the second oscillator's message. This imposes $T_{refr} > T_{decode}$. Therefore the width of the blind spot is at least equal to $T_{transmit} + T_{decode} = T_{delay}$.

As seen in the previous section, the accuracy of synchronization is limited by $T_{delay}$, which is equal to

$$T_{delay} = T_{propagation} + T_{transmit} + T_{decode} \, .$$

If considering a short range network with a short transmitting pulse, such as UWB systems, then the basic model would fit well, as $T_{delay}$ would be negligible [7]. If applying the synchronization algorithm to a wireless network that uses long transmission bursts, then transmission delays are critical. As the accuracy of the synchronization scheme is limited by $T_{delay}$, the scheme needs to be modified to counter this unwanted effect.

One strategy to combat this effect is for the transmitter to delay its transmission for a time equal to:

$$T_{wait} = T_{sync} - (T_{transmit} + T_{decode}) \quad (4)$$

where $T_{sync}$ is the synchronization period. With this approach, the receiver would increment its phase exactly $T_{sync}$ seconds after the transmitter has fired.

Based on the new transmitting strategy, the finite state machine describing the behavior of an oscillator has been modified. A Waiting State has been added before the Transmitting State. A node will stay in this state for a time equal to $T_{wait}$. The new state machine describing one node is shown in Fig. 2b has already been discussed.

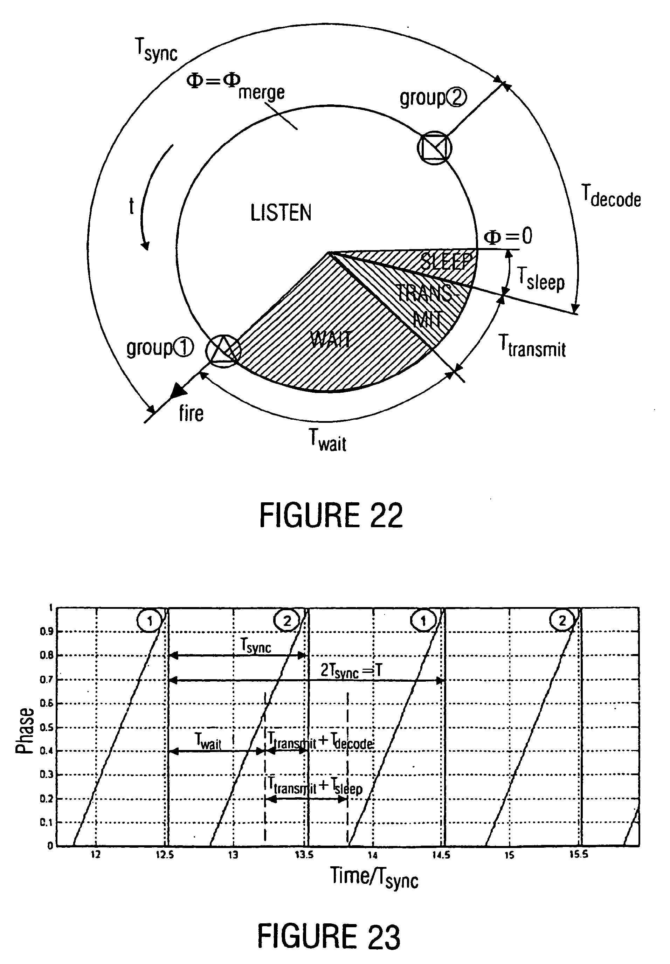

Fig. 22 shows a pie representation of the domains of the state variable when using the time advance strategy. Initially the markers representing a system of $N$ oscillators are randomly distributed over the circle and will oscillate around periodically. Over time the oscillators will form two groups, each group diametrically opposed on the pie chart representation of the states space.

On Fig. 22, group 2 has transmitted a synchronization message and is in the state placed exactly $T_{decode}$ after finishing to transmit. At this instant, group 1 has successfully received and decoded the synchronization burst of group 2, and it fires ($\phi = \phi_{threshold}$). As both nodes are already synchronized, this burst has not affected the state of group 1 (no phase increment). If group 1 had been spaced by less than $T_{sync}$ from group 2, the synchronization burst would have pushed its state towards the diametrically opposed state to group 2. The system will converge because $\Delta\phi > 0$.

As both groups oscillate with the same period T, when two groups have formed, the distance that separates them will stay equal to T = $T_{sync}$/2 indefinitely. Therefore, when synchronized, the states of the two groups will orbit in diametrical opposition.

Thanks to the introduction of the waiting time, stability is maintained, because even if a synchronization burst causes a node to fire, this node will always wait before transmitting. Therefore, the refractory time can be set to zero, and $T_{sleep} = T_{lat}$. As a consequence, the sleeping state is redefined such that, when a node is in the sleeping state, it can receive but it cannot modify its phase.

The time advance synchronization scheme will work if two conditions are met. First of all, $T_{transmit} + T_{decode}$ cannot be larger than the receiving time $T_{receive}$, with $T_{receive} = T_{listen} + T_{sleep}$ and $T_{sleep} = T_{lat}$, which is now equal to $T_{listen} + T_{sleep} = T + T_{decode}$. Otherwise an oscillator would never be able to fully receive and decode a synchronization message. This leads to the following condition:

$$T_{transmit} < T_{sync} \quad\quad\quad\quad (5)$$

Secondly, as $T_{wait}$ needs to be positive, this requires $T_{sync} - (T_{transmit} + T_{decode}) > 0$. This imposes:

$$T_{transmit} + T_{decode} < T_{sync} \quad\quad\quad\quad (6)$$

This constraint supersedes (5).

Once these conditions are met, 2 groups of oscillators should form, each group using messages from the previous group to synchronize. Fig. 23 plots the resulting phases of 30 nodes that successfully synchronize using the Time Advance Synchronization scheme. For convenience, the considered cell containing all nodes is small ($T_{propagation}$ is negligible). The settings are: $T_{transmit}$ =0.20·$T_{sync}$, $T_{decode}$ =0.10·$T_{sync}$, $T_{sleep}$=0.40·$T_{sync}$, $\varepsilon$=0.1 and $b$=3, i.e. similar to the settings for Fig. 4.

As it can be seen on Fig. 23, although the total delay is equal to $T_{delay}$ =0.30·$T$, the oscillators are able to perfectly synchronize their firing instants. Therefore the accuracy is not limited anymore by the transmitting and decoding delays.

The time reference (firing instant) that is created by the synchronization algorithm described previously could be imposed on by reference oscillators that would transmit synchronization bursts every $T_{sync}$ seconds or integer multiples thereof without being influenced by other oscillators. This goes against the self-organized nature of the studied network, and, as it will be shown, it causes problems. In the following, a solution will be presented, so that a known timing can be imposed onto a self-organized network.

A reference node corresponds to an oscillator that fires periodically every $T_{sync}$ seconds or integer multiples thereof without ever modifying its phase or state variable.

When transmitting with a period equal to the synchronization period $T_{sync}$ the reference node transmits the synchronization signal twice as often as a member node in a synchronized state. But the reference node can also be adapted to transmit with a period equal to the period of the phase function T = 2$T_{sync}$, i.e. with the same period as the individual member nodes, or with integer multiples of $T_{sync}$, for example 3$T_{sync}$, etc. As the self-organizing member nodes synchronize among themselves with $T_{sync}$ the requirement for the reference node imposing a reference timing structure is to transmit the "reference" synchronization signals in a manner that once the member nodes are synchronized the synchronization signals from the reference node are in synchrony to those of the member nodes, as otherwise the member nodes would always have to newly synchronize on the synchronization signals of the reference node, never reaching a stable synchronized state.

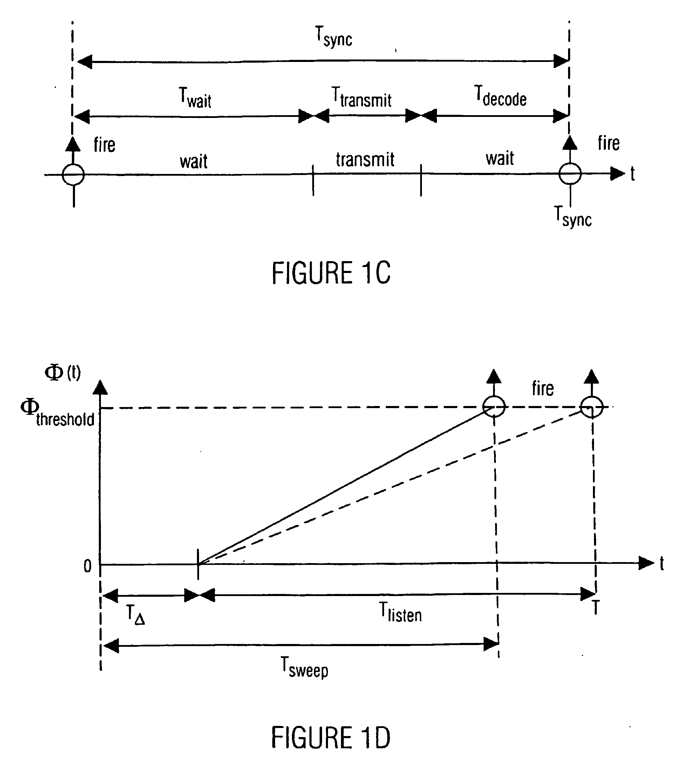

Therefore in one embodiment the reference node simply transmits a synchronization burst every period following the time advance strategy (after firing, wait during $T_{wait}$ before transmitting). Fig. 1c represents one period of such a reference oscillator, wherein the period the reference node transmits at is equal to $T_{sync}$, with $T_{sync} = T_{wait} + T_{transmit} + T_{decode}$, and wherein the second "waiting time" $T_{wait}$ of the reference node as shown in Fig. 1c corresponds to the decoding time $T_{decode}$ of a member node to obtain $T_{sync}$ as period.

Fig 1d shows a corresponding "phase function" for another embodiment of the reference node, wherein the reference node transmits with a period equal to the phase function period T, and wherein $T_{\Delta}$ = T - $T_{listen}$, for example, corresponds to the time $T_{wait}$ + $T_{transmit}$ of a member node. The corresponding phase function would, for example, stay equal to zero during a delta period $T_{\Delta}$, defined by $T_{\Delta}$=T-$T_{listen}$, and linearly increase over time during $T_{listen}$ and reach the treshold value after $T_{listen}$. Thus, after a time corresponding to $T_{listen}$ of a member node's phase function the reference node would fire, i.e. would change again into a wait state.

The delta period $T_{\Delta}$ is defined as the time difference between the period at which the reference node transmits the synchronization signals and the listening time $T_{listen}$. In Fig. 1d, the former corresponds to the period of the first function T.

In other words, depending on the state machine model, $T_{\Delta}$ is typically either defined by $T_{\Delta} \leq T_{transmit}$ (immediate transmission without wait state), $T_{\Delta} \leq T_{wait} + T_{transmit}$ (with wait state but without sleeping state) or $T_{\Delta} \leq T_{wait} + T_{transmit} + T_{sleep}$, but can also obtain other values. The delta period $T_{\Delta}$ typically comprises the delays of those states in which the member node does not increment its internal value or phase according to the first function or phase function.

Referring to Fig. 1c, wherein the reference node transmits the synchronization signal with a period equal to $T_{sync}$, a similar corresponding phase function could be drawn, with, for example, a delta period $T_{\Delta} = T_{wait} + T_{transmit}$ and an amended listening period $T'_{listen} = T_{decode}$.

A reference node in a system of oscillators could have positive or negative effects on the synchronization scheme. As it fires and transmits twice while normal nodes do so only once within a period of T = 2$T_{sync}$, it could accelerate the mean time to synchrony and force other nodes to fit into a predetermined time slot. On the other hand, as it is not listening to other nodes, it is totally unflexible and could disturb the whole synchronization process. In the following it will be shown that there is a deafness problem between reference and normal nodes.

The deafness problem among normal oscillators is caused by the fact that a node cannot receive and transmit simultaneously. In the case of reference nodes, the deafness problem comes from the fact that a reference node does not receive any message, and it simply transmits synchronization bursts periodically.

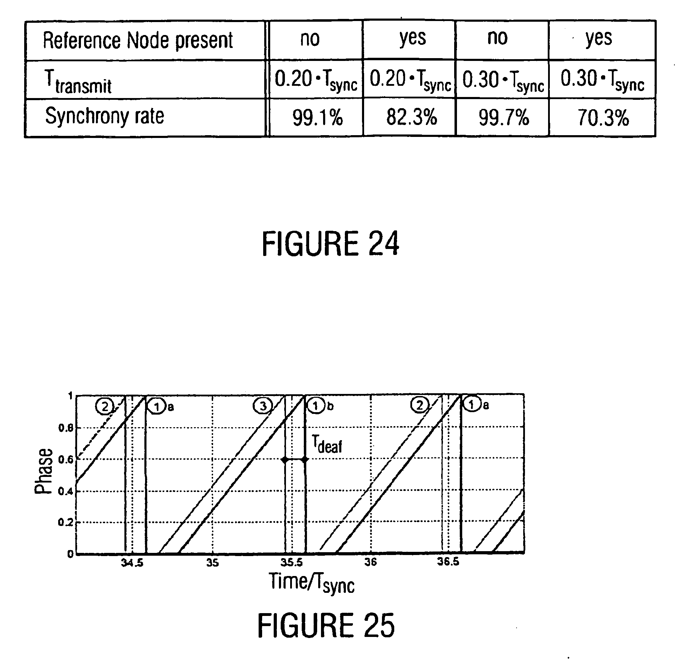

To measure the importance of this deafness, the results shown in Fig. 24 were obtained after running 1000 simulations on a fully-meshed network of 30 nodes with the following settings: $T_{sleep} = 0.45·T$, $T_{decode}=T_{sleep}-T_{transmit}$, $b = 3$ and $\varepsilon$ =0.08. Successful synchronization is declared when the time difference between firing instants is equal or lower than $T_{propagation}$.

When a reference oscillator is present in the network, the synchrony rate becomes close to $\left(1 - \frac{T_{transmit}}{T}\right)$. As an oscillator cannot receive while transmitting, it seems that this deafness is responsible for the degradation of synchrony rates.

To try understanding this deafness, Fig. 25 plots the resulting phases of the 30 nodes including one reference node after a simulation where synchronization is not successful. The settings are the same as previously with $T_{transmit} = 0.20 \cdot T_{sync}$.

Interestingly the system does stabilize, but four groups form. Two groups correspond to the reference node and are noted Groups 1a and 1b Two other groups, noted 2 and 3, are synchronized among themselves (each firing $T_{sync}$ seconds apart), but have fallen into the deaf spot of the reference group.

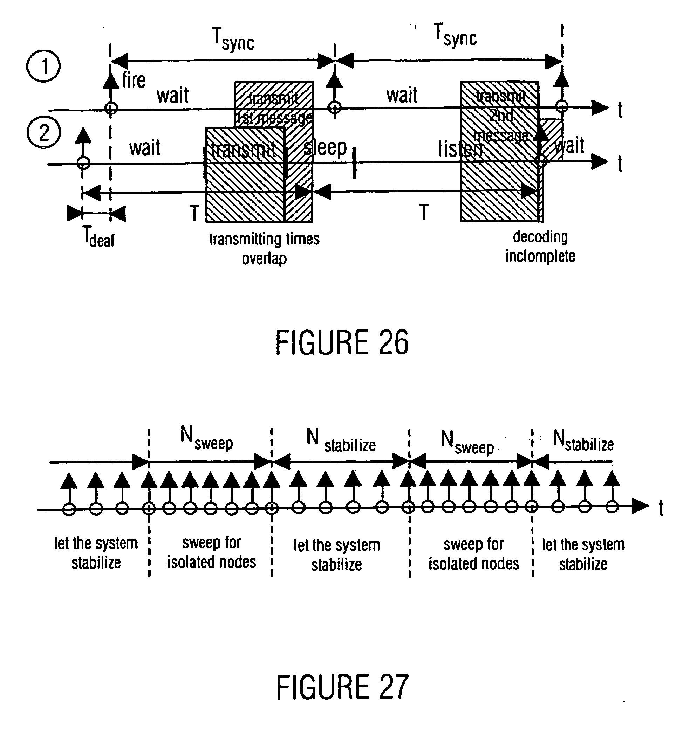

Fig. 26 plots the state evolution of a reference node, noted 1, and a normal node, noted 2, during two periods when the firing instants are spaced by $T_{deaf}$ and the reference group is late compared to the other.

During the two periods plotted on Fig. 26, 2 is never able to fully receive and decode the two synchronization bursts transmitted by the reference oscillator. During the first period, transmitting periods overlap. As an oscillator cannot receive while transmitting, 2 is deaf to this first synchronization message. During the second period, it is able to fully receive the second synchronization message, but it is not able to fully decode it, because it fires while decoding it.

If $T_{deaf}$ had been larger than $T_{transmit}$, then 2 would have received the first message, and would have progressively shifted its firing instant to synchronize with the reference node. Therefore the width of the deaf spot is equal to the transmitting delay $T_{transmit}$, and confirms the results presented in Fig. 24.

As it is not possible to control the formation of the time slots for normal oscillators, the transmission scheme of a reference node can be slightly modified to regain synchrony. A proposed solution to tackle the deafness problem is to raise the frequency of the corresponding phase function $\phi(t)$ for reference oscillators by an phase offset $f_{sweep}$ during $N_{sweep}$ firings (sweep mode). For example, in an embodiment, wherein the reference node transmits synchronization signals with a period equal to the phase function T, the reference node shortens the natural oscillatory period $T$, and causes reference nodes to fire early. This way it catches up with the nodes that were trapped within $T_{deaf}$.

Fig. 1d plots the above mentioned new period $T_{sweep}$, i.e. the changed or reduced synchronization period $T_{sweep}$, of a reference node that decides to sweep, with $T_{sweep} < T$.

$T_{listen}$ is still referenced to the listening time of the normal nodes, which is equal to:

$$T_{listen} = T_{sync} + T_{decode} - T_{sleep} \qquad (7)$$

The phase function with the adjustable phase offset, $f_{offset}$, for the reference node 12 is defined as:

$$\phi(t) = \begin{cases} 0 & when\ t \in [0, T_\Delta] \\ (1 + f_{sweep}) \cdot \dfrac{t - T_\Delta}{T_{listen}} & when\ t \in [T_\Delta, T_{sweep}] \end{cases} ;$$

The respective phase function or first function of the member node 14,16 can be defined as:

$$\phi(t) = \begin{cases} 0 & when\ t \in [0, T_\Delta] \\ \dfrac{t - T_\Delta}{T_{listen}} & when\ t \in [T_\Delta, T] \end{cases}$$

wherein, like for the reference node, $T_\Delta$ depends on the state machine model, and wherein $T_\Delta$ is typically either defined by $T_\Delta \leq T_{transmit}$ (immediate transmission without wait state), $T_\Delta \leq T_{wait} + T_{transmit}$ (with wait state but without sleeping state) or $T_\Delta \leq T_{wait} + T_{transmit} + T_{sleep}$, but can also obtain other values.

The synchronization period changer 34 of the reference node 12 can be operative to change the synchronization period $T_{sync}$ of the transmitter 32 to the changed synchronization period $T_{sweep}$ by applying a phase offset $f_{sweep} > 0$ to the above phase function.

From this modified phase function, the new period, $T_{sweep}$ can be calculated:

$$T_{sweep} = T_\Delta + \frac{T_{listen}}{1 + f_{sweep}} = T - T_{listen} \cdot \left(1 - \frac{1}{1 + f_{sweep}}\right) \qquad (9)$$

It should be noted from Figs. 1c, 1d that if a reference node fires before it finishes transmitting, then the synchronization burst is not fully transmitted. Therefore this imposes a constraint on $f_{sweep}$ such that $T_{sweep} \geq T_{wait} + T_{transmit}$. The frequency offset limit can be calculated:

$$f_{sweepmax} = \frac{T_{decode}}{T_{sync} - T_{sleep}} \qquad (10)$$

The variation boundaries for $f_{sweep}$ are therefore:

$$0 \leq f_{sweep} \leq f_{sweepmax} \cdot$$

This sweeping scheme presented high instability when applied to a meshed network, and synchrony was not always reached. Therefore sweeping should be applied after normal nodes have reached a synchronous state. Then the scheme can be applied during a sweep mode for $N_{sweep}$ periods to make the deafness between reference and normal nodes disappear, and then $f_{sweep}$ should be set back to zero to let the system stabilize in a stabilize mode during $N_{stability}$ periods. Fig. 27 represents the global sweep and stabilize scheme.

To cover the nodes that are within the deafness window of width $T_{transmit}$, $f_{sweep}$ and $N_{sweep}$ need to be chosen such that $N_{sweep} \cdot (T - T_{sweep}) \geq T_{transmit}$. This translates to the following equation:

$$N_{sweep} \cdot \left(1 - \frac{1}{1 + f_{sweep}}\right) \geq \frac{T_{transmit}}{T_{listen}} \qquad (11)$$

The deafness problem could be solved within one period if the reference node simply shortens its period by $T_{transmit}$ during one period. This corresponds to $N_{sweep} = 1$ and $f_{sweep} = \left(\frac{T_{transmit}}{T_{listen} - T_{transmit}}\right) \cdot$ This way, the nodes that were deaf to reference messages would hear them again, and be able to synchronize within one period. However this is relatively unstable and sweeping with a lower frequency increment during more periods is preferable.

As a particular case of the presented scheme, it can be interesting for the reference node to come back exactly in the same time slot as it was before sweeping. This is the case if $N_{sweep} \cdot (T - T_{sweep}) = T$. This translates to the following conditions:

$$f_{sweep} = \frac{1}{N_{sweep} \cdot \frac{T_{listen}}{T} - 1} \qquad (12)$$

For example for $T_{sweep} = 0{,}8T$ the number of sweep periods is $N_{sweep} = 5$, i.e. the reference node comes back to the same time slot after five reduced periods, which correspond to four normal periods.

The previous paragraph showed how deafness between normal and reference nodes can be avoided by progressively shifting the firing instant of reference nodes. Applying this scheme to a meshed network where multiple reference nodes are present would reflect a realistic scenario, where a mobile unit would always be within one or two hops of a base station.

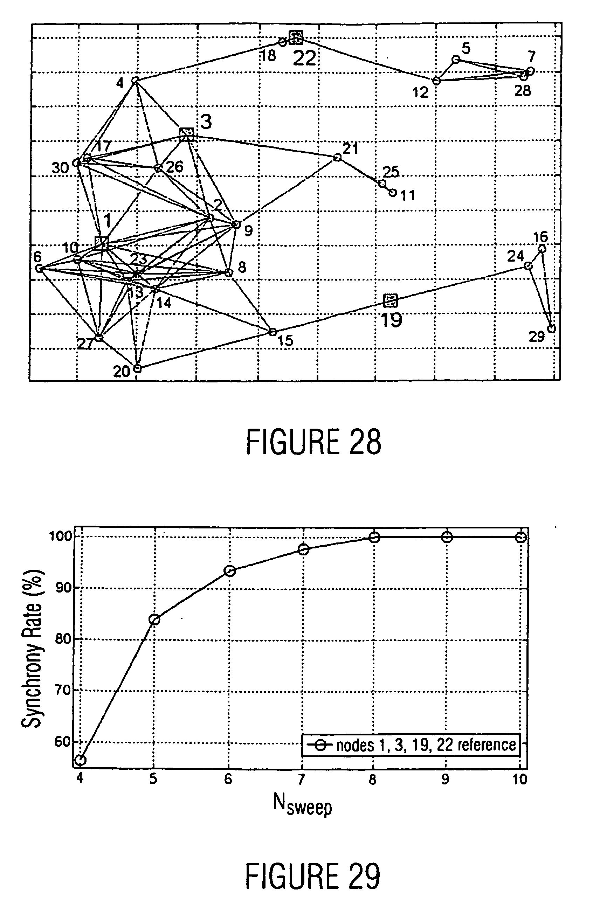

Fig. 28 plots network NW2 with four reference nodes outlined (nodes 1, 3, 19 and 22). The reference nodes were chosen such that any normal node would be within a maximum of two hops of a reference node.

Having multiple reference nodes could completely destabilize the system, because a node would be submitted to messages from its closest reference node and from unsynchronized nodes. On the other hand, as all reference nodes give the same reference timing, fewer nodes should fall into the deafness area, as a node is reachable within a maximum of two hops.

Fig. 29 plots the simulation results after 500 sets of initial conditions. The four reference nodes are indicated on Fig. 28 by large squares. $N_{sweep}$ and $f_{sweep}$ are chosen to retain global reference timing after sweeping. $N_{stability}$ is chosen such that $N_{sweep} + N_{stability} = 30$. The time settings are $T_{transmit} = 0.20 \cdot T_{sync}$, $T_{decode} = 0.25 \cdot T_{sync}$ and $T_{sleep} = 0.45 \cdot T_{sync}$. The coupling settings are b = 3 and $\varepsilon = 0.14$.

As $N_{sweep}$ increases, the synchrony rate increases very rapidly, and it is equal to 100% when $N_{sweep} = \{8,9,10\}$. This shows that when several reference oscillators are present in the system, sweep should be made smoothly to let the system stabilize.

To summarize the aforementioned, it can be said that based on the present invention a reference timing is imposed onto a network that synchronizes in a completely distributed manner. Synchronization is defined in the sense of aligning local timing units, such that all nodes adhere to one global, common time scale. A decentralized network is considered, so no global coordination unit which manages the behaviour of terminals is assumed. In a first embodiment the inventive reference node simply transmits synchronization signals at the same period as normal nodes, in other words with a period equal to the synchronization period $T_{sync}$, the phase function period T or integer multiples of the synchronization period $T_{sync}$. With this solution already a high global synchronization rate can be achieved. When imposing a reference timing based on the aforementioned embodiment, synchronization is not always obtained because normal nodes cannot listen while transmitting. Therefore, they cannot always receive synchronization signals from reference nodes. To counter this unwanted effect the transmission scheme of preferred embodiments of reference nodes is modified such that synchrony can be ensured and all network members agree on the imposed reference timing. A sweep mode is introduced for the reference nodes during which the reference node modifies its synchronization period for one or more periods to reach those normal or member nodes which would otherwise be in the deaf spot of the reference node.

In an especially preferred embodiment of the invention the time advance strategy comprising the wait state is used. Thus, a global reference timing, i.e. a globally common reference time slot allocation in which the time slots of all nodes are assigned to the same absolute time instance, in combination with a synchronization accuracy is achieved, which makes the invention applicable for WLAN, GSM, UMTS or other networks.

Depending on certain implementation requirements of the inventive methods, the inventive methods can be implemented in hardware or in software. The implementation can be performed using a digital storage medium, in particular a disk, DVD or a CD having electronically readable control signals stored thereon, which cooperate with a programmable computer system such that the inventive methods are performed. Generally, the present invention is, therefore, a computer program product with a program code stored on a machine readable carrier, the program code being operative for performing the inventive methods when the computer program product runs on a computer. In other words, the inventive methods are, therefore, a computer program having a program code for performing at least one of the inventive methods when the computer program runs on a computer.

**Claims**

1. Network comprising:

    a reference node (12) adapted to transmit a sequence of synchronization signals (140), the synchronization signals (140) being separated by time by a synchronization period ($T_{sync}$), the synchronization period ($T_{sync}$) being within a globally predetermined time slot structure and a synchronization signal (140) having a synchronization signal length ($T_{transmit}$) :
    the reference node (12) comprising a synchronization period changer (34) adapted to change the synchronization period ($T_{sync}$, $T_{sweep}$) for one or more periods;
    a member node (14) adapted
    to receive the synchronization signals (140; 140');
    to synchronize on the synchronization signals (140) in a step by step manner, a step having an associated synchronization state; and
    to transmit synchronization signals (140; 140') at time instants, the time instants depending on a synchronization state in an associated step; and
the network further comprising:

an additional member node (16) adapted
to receive the synchronization signals (140; 140');
to synchronize on the synchronization signals (140) in a step by step manner, a step having an associated synchronization state; and
to transmit synchronization signals (140; 140') at time instants, the time instants depending on a synchronization state in an associated step;
the network being **characterized in that** the member node (14) and the additional member node (16) are adapted to react in the same manner to a received synchronization signal (140; 140') irrespective of the synchronization signal (140; 140') originating from the reference node (12) or the member node (16, 14).

2. Network according to claim 1, in which the member node (14) is adapted to only either transmit or receive at the same time.

3. Network according to one of the claims 1 to 2, in which the member node (14) and the additional member node (16) are adapted to communicate with each other within a synchronization schedule determined by the sequence of synchronization signals (140) generated by the reference node (12).

4. Network according to one of the claims 1 to 3, in which the reference node (12) further comprises:

a sweep mode controller (36) for controlling the synchronization period changer (34), the sweep mode controller (36) being operative to detect an event and to activate (37) the synchronization period changer (34) based on a detected event.

5. Network according to claim 4, wherein the detected event is a predefined elapsed time.

6. Network according to claim 4, in which the sweep mode controller (36) is operative to monitor, whether there exist synchronization signals (140') in the network, which are offset from the synchronization signal (140) by a time offset different from the synchronization period ($T_{sync}$) or multiples thereof, and wherein the detected event is a detection of such an offset synchronization signal (140').

7. Network according to claim 6, wherein the time offset is higher than a minimum threshold determined by a general synchronization uncertainty.

8. Network according to one of the claims 1 to 7, wherein the synchronization period changer (34) is operative to reduce the synchronization period ($T_{sync}$, $T_{sweep}$).

9. Network according to one of the claims 1 to 8, wherein the member node (14) is adapted:

to increase an internal signal value according to a given first function over time being in a listen state (210);
to receive and decode the synchronization signal (140; 140') and modify the internal signal value according to a second function being in a listen state (210);
to compare the internal signal value with a threshold value being in a listen state (210); and
to enter into a fire state (220, 230), when the internal signal value is equal to the threshold value, wherein the member node (14) is operative to generate the synchronization signal (140; 140') in response to the internal signal value being equal to the threshold value or after a waiting time ($T_{wait}$), the waiting time

10. Network according to claim 9, in which the reference node (12) comprises:

a synchronization period changer (34) for changing the synchronization period ($T_{sync}$, $T_{sweep}$) for one or more periods,
wherein the synchronization period changer (34) is operative to change the synchronization period ($T_{sync}$, $T_{sweep}$) by less than a maximum period change depending on the given first function of the member node.

11. Network according to claim 9 or 10, in which the member node (14) has:

a listen state (210) having a listening time $T_{listen}$;
a transmitting state (230) having a synchronization signal length $T_{transmit}$; and
a phase function $\Phi(t)$ as first function, defined as follows :

$$\phi(t) = \begin{cases} 0 & \text{when } t \in [0, T_\Delta] \\ \dfrac{t - T_\Delta}{T_{listen}} & \text{when } t \in [T_\Delta, T] \end{cases}$$

with a phase function period T; and
with a delta delay $T_\Delta$, which is defined by

$$T_\Delta \leq T_{transmit}.$$

**12.** Network according to claim 11, in which the member node (14) has:

a waiting state (220) having a waiting time $T_{wait}$; or
a sleep state (240) having a sleeping time $T_{sleep}$; and
a delta delay $T_\Delta$ which is defined as follows:

$$T_\Delta \leq T_{wait} + T_{transmit}$$

or

$$T_\Delta \leq T_{wait} + T_{transmit} + T_{sleep}.$$

**13.** Network according to one of the claims 9 to 12, in which the reference node (12) has a phase function $\Phi(t)$, defined as:

$$\phi(t) = \begin{cases} 0 & \text{when } t \in [0, T_\Delta] \\ (1 + f_{sweep}) \cdot \dfrac{t - T_\Delta}{T_{listen}} & \text{when } t \in [T_\Delta, T_{sweep}] \end{cases}$$

with a phase offset $f_{sweep}$;
with a listening time $T_{listen}$;
with a duration $T_{sweep}$ of a changed synchronization period; and
with a delta delay $(T_\Delta)$ which is defined as follows:

$$T_\Delta \leq T_{transmit};$$

wherein $T_{transmit}$ is the synchronization signal length; and
wherein the synchronization period changer (34) is operative to change the synchronization period ($T_{sync}$, $T_{sweep}$) by applying a phase offset $f_{sweep} > 0$ to the phase function of the reference node corresponding to the above phase function.

14. Network according to claim 13, in which the reference node (12) has:

a delta delay $T_\Delta$ which is defined as:

$$T_\Delta \leq T_{wait} + T_{transmit}$$

or

$$T_\Delta \leq T_{wait} + T_{transmit} + T_{sleep},$$

wherein $T_{wait}$ is a waiting time; and

wherein the synchronization period changer (34) is operative to change the synchronization period ($T_{sync}$, $T_{sweep}$) by applying a phase offset $f_{sweep} > 0$ to the phase function of the reference node corresponding to the phase function with a maximum phase offset value $f_{sweepmax}$ determined by:

$$f_{sweepmax} = \frac{T_{decode}}{T_{sync} - T_{sleep}}$$

wherein $T_{decode}$ is a decoding time of the member node (14; 16), and wherein $T_{sleep}$ is a sleeping time of the member node (14; 16).

15. Network according to one of the claims 10 to 14, wherein the synchronization period changer (34) is operative to change the synchronization period ($T_{sync}$, $T_{sweep}$) for a specific number $N_{sweep}$ of periods, wherein the specific number $N_{sweep}$ of periods is determined by

$$N_{sweep} \cdot \left( 1 - \frac{1}{1 + f_{sweep}} \right) \geq \frac{T_{transmit}}{T_{listen}} \; ;$$

wherein $f_{sweep}$ is a phase offset of the first function;

wherein $T_{transmit}$ is a synchronization signal length of the synchronization signal (140; 140'); and

wherein $T_{listen}$ is a listening time associated with a listening state (210).

16. Network according to claim 15, wherein the synchronization period changer (34) is operative to determine the specific number $N_{sweep}$ of periods such that after $N_{sweep}$ of periods the transmitter (32) transmits the synchronization signal in a same time slot as before, and wherein the number of periods $N_{sweep}$ is determined by:

$$N_{sweep} \cdot (T - T_{sweep}) = T \; ;$$

wherein T is a period of the first function; and

wherein $T_{sweep}$ is a duration of a changed synchronization period.

17. Network according to one of the claims 10 to 16, wherein the synchronization period change (34) is operative to progressively shift the time instant at which the reference node (12) transmits the synchronization signal (140) respective to the time instant at which a member node (14) transmits a synchronization signal (140').

18. Method for operating a network (10) comprising the following steps:

transmitting a sequence of synchronization signals (140) by a reference node (12), the synchronization signals (140) being separated in time by a synchronization period ($T_{sync}$), the synchronization period ($T_{sync}$) being within a globally predetermined time slot structure and the synchronization signal (140) having a synchronization signal length ($T_{transmit}$);

changing a synchronization signal period ($T_{sync}$, $T_{sweep}$) for one or more periods by a synchronization period changer of the reference node (12);

receiving the synchronization signals (140; 140') by a member node;

progressively synchronizing on the synchronization signals (140) by the member node in a step by step manner, a step having an associated synchronization state; and

transmitting synchronization signals (140; 140') by the member node at time instants, the time instants depending on a synchronization state in an associated step;

receiving the synchronization signals (140; 140') by another member node;

progressively synchronizing on the synchronization signals (140) by the another member node in a step by step manner, a step having an associated synchronization state; and

transmitting synchronization signals (140; 140') by the another member node at time instants, the time instants depending on a synchronization state in an associated step;

wherein the member node (14) and the additional member node (16) are adapted to react in the same manner to a received synchronization signal (140; 140') irrespective of the synchronization signal (140; 140') originating from the reference node (12) or the member node (16, 14).

19. Computer program having a program code for performing a method in accordance with claim 18, when the program runs on a computer and the computer being connected to the network to be operated.

**Patentansprüche**

1. Netz, das folgende Merkmale aufweist:

einen Referenzknoten (12), der angepasst ist, um eine Sequenz von Synchronisationssignalen (140) zu senden, wobei die Synchronisationssignale (140) zeitlich durch eine Synchronisationsperiode ($T_{sync}$) getrennt sind, wobei die Synchronisationsperiode ($T_{sync}$) innerhalb einer global vorbestimmten Zeitschlitzstruktur ist und ein Synchronisationssignal (140) eine Synchronisationssignallänge ($T_{senden}$) aufweist; wobei der Referenzknoten (12) einen Synchronisationsperiodenveränderer (34) aufweist, der angepasst ist, um die Synchronisationsperiode ($T_{sync}$, $T_{wobbeln}$) für eine oder mehrere Perioden zu verändern; einen Elementknoten (14), der angepasst ist:

um die Synchronisationssignale (140; 140') zu empfangen; um an den Synchronisationssignalen (140) in einer Schritt-für-Schritt-Weise zu synchronisieren, wobei ein Schritt einen zugeordneten Synchronisationszustand aufweist; und um Synchronisationssignale (140; 140') zu Zeitpunkten zu senden, wobei die Zeitpunkte von einem Synchronisationszustand in einem zugeordneten Schritt abhängen; und wobei das Netz ferner folgendes Merkmal aufweist:

einen zusätzlichen Elementknoten (16), der angepasst ist:

um die Synchronisationssignale (140; 140') zu empfangen; um an den Synchronisationssignalen (140) in einer Schritt-für-Schritt-Weise zu synchronisieren, wobei ein Schritt einen zugeordneten Synchronisationszustand aufweist; und um Synchronisationssignale (140; 140') zu Zeitpunkten zu senden, wobei die Zeitpunkte von einem Synchronisationszustand in einem zugeordneten Schritt abhängen; wobei das Netz **dadurch gekennzeichnet ist, dass** der Elementknoten (14) und der zusätzliche Elementknoten (16) angepasst sind, um in der gleichen Weise auf ein empfangenes Synchronisationssignal (140; 140') zu reagieren, unabhängig davon, ob das Synchronisationssignal (140; 140') von dem Referenzknoten (12) oder dem Elementknoten (16, 14) ausgeht.

2. Netz gemäß Anspruch 1, bei dem der Elementknoten (14) angepasst ist, um gleichzeitig entweder nur zu senden oder zu empfangen.

**3.** Netz gemäß einem der Ansprüche 1 bis 2, bei dem der Elementknoten (14) und der zusätzliche Elementknoten (16) angepasst sind, um miteinander innerhalb eines Synchronisationszeitplans zu kommunizieren, der durch die Sequenz von Synchronisationssignalen (140), die durch den Referenzknoten (12) erzeugt werden, bestimmt ist.

**4.** Netz gemäß einem der Ansprüche 1 bis 3, bei dem der Referenzknoten (12) ferner folgendes Merkmal aufweist:

eine Wobbel-Modus-Steuerung (36) zum Steuern des Synchronisationsperiodenveränderers (34), wobei die Wobbel-Modus-Steuerung (36) wirksam ist, um ein Ereignis zu erfassen und den Synchronisationsperiodenveränderer (34) basierend auf einem erfassten Ereignis zu aktivieren (37).

**5.** Netz gemäß Anspruch 4, bei dem das erfasste Ereignis eine vordefinierte verstrichene Zeit ist.

**6.** Netz gemäß Anspruch 4, bei dem die Wobbel-Modus-Steuerung (36) wirksam ist, um zu überwachen, ob Synchronisationssignale (140') in dem Netz vorliegen, die von dem Synchronisationssignal (140) um einen Zeitversatz versetzt sind, der sich von der Synchronisationsperiode ($T_{sync}$) oder Vielfachen derselben unterscheidet, und bei dem das erfasste Ereignis eine Erfassung eines derartigen versetzten Synchronisationssignals (140') ist.

**7.** Netz gemäß Anspruch 6, bei dem der Zeitversatz größer ist als eine minimale Schwelle, die durch eine allgemeine Synchronisationsunsicherheit bestimmt ist.

**8.** Netz gemäß einem der Ansprüche 1 bis 7, bei dem der Synchronisationsperiodenveränderer (34) wirksam ist, um die Synchronisationsperiode ($T_{sync}$, $T_{wobbeln}$) zu reduzieren.

**9.** Netz gemäß einem der Ansprüche 1 bis 8, bei dem der Elementknoten (14) angepasst ist:

um in einem Hören-Zustand (210) einen internen Signalwert gemäß einer gegebenen ersten Funktion über die Zeit zu erhöhen;
um in einem Hören-Zustand (210) das Synchronisationssignal (140; 140') zu empfangen und zu decodieren und den internen Signalwert gemäß einer zweiten Funktion zu modifizieren;
um in einem Hören-Zustand (210) den internen Signalwert mit einem Schwellenwert zu vergleichen; und
um in einen Abfeuern-Zustand (220, 230) einzutreten, wenn der interne Signalwert gleich dem Schwellenwert ist, wobei der Elementknoten (14) wirksam ist, um das Synchronisationssignal (140; 140') ansprechend darauf, dass der interne Signalwert gleich dem Schwellenwert ist, zu erzeugen oder nach einer Wartezeit ($T_{warten}$), wobei die Wartezeit beginnt, wenn der interne Signalwert gleich dem Schwellenwert ist.

**10.** Netz gemäß Anspruch 9, bei dem der Referenzknoten (12) folgendes Merkmal aufweist:

einen Synchronisationsperiodenveränderer (34) zum Verändern der Synchronisationsperiode ($T_{sync}$, $T_{wobbeln}$) für eine oder mehrere Perioden,
wobei der Synchronisationsperiodenveränderer (34) wirksam ist, um die Synchronisationsperiode ($T_{sync}$, $T_{wobbeln}$) abhängig von der gegebenen ersten Funktion des Elementknotens um weniger als eine Maximalperiodenveränderung zu verändern.

**11.** Netz gemäß Anspruch 9 oder 10, bei dem der Elementknoten (14) folgende Merkmale aufweist:

einen Hören-Zustand (210) mit einer Hörzeit $T_{hören}$;
einen Sendezustand (230) mit einer Synchronisationssignallänge $T_{senden}$; und
eine Phasenfunktion Φ(t) als erste Funktion, die wie folgt definiert ist:

$$\phi(t) = \begin{cases} 0 & wenn\ t \in \left[0, T_{\Delta}\right] \\ \dfrac{t - T_{\Delta}}{T_{hören}} & wenn\ t \in \left[T_{\Delta}, T\right] \end{cases}$$

mit einer Phasenfunktionsperiode T; und

mit einer Deltaverzögerung $T_\Delta$, die definiert ist durch:

$$T_\Delta \leq T_{senden}.$$

**12.** Netz gemäß Anspruch 11, bei dem der Elementknoten (14) folgende Merkmale aufweist:

einen Wartezustand (220) mit einer Wartezeit $T_{warten}$; oder
ein Schlafzustand (240) mit einer Schlafzeit $T_{schlafen}$; und
eine Deltaverzögerung $T_\Delta$, die wie folgt definiert ist:

$$T_\Delta \leq T_{warten} + T_{senden}$$

oder

$$T_\Delta \leq T_{warten} + T_{senden} + T_{schlafen}.$$

**13.** Netz gemäß einem der Ansprüche 9 bis 12, bei dem der Referenzknoten (12) eine Phasenfunktion $\Phi(t)$ aufweist, die wie folgt definiert ist:

$$\phi(t) = \begin{cases} 0 & \text{wenn } t \in [0, T_\Delta] \\ (1 + f_{wobbeln}) \cdot \dfrac{t - T_\Delta}{T_{h\ddot{o}ren}} & \text{wenn } t \in [T_\Delta, T_{wobbeln}] \end{cases}$$

mit einem Phasenversatz $f_{wobbeln}$;
mit einer Hörzeit $T_{h\ddot{o}ren}$;
mit einer Dauer $T_{wobbeln}$ einer veränderten Synchronisationsperiode; und
mit einer Deltaverzögerung ($T_\Delta$), die wie folgt definiert ist:

$$T_\Delta \leq T_{senden};$$

wobei $T_{senden}$ die Synchronisationssignallänge ist; und
wobei der Synchronisationsperiodenveränderer (34) wirksam ist, um die Synchronisationsperiode ($T_{sync}$, $T_{wobbeln}$) zu verändern, indem ein Phasenversatz $f_{wobbeln} > 0$ auf die Phasenfunktion des Referenzknotens in Entsprechung zu der obigen Phasenfunktion angewendet wird.

**14.** Netz gemäß Anspruch 13, bei dem der Referenzknoten (12) folgendes Merkmal aufweist:

eine Deltaverzögerung $T_\Delta$, die folgendermaßen definiert ist:

$$T_\Delta \leq T_{warten} + T_{senden}$$

oder

$$T_\Delta \leq T_{warten} + T_{senden} + T_{schlafen},$$

wobei $T_{warten}$ eine Wartezeit ist; und

wobei der Synchronisationsperiodenveränderer (34) wirksam ist, um die Synchronisationsperiode ($T_{sync}$, $T_{wobbeln}$) zu verändern, indem ein Phasenversatz $f_{wobbeln} > 0$ an die Phasenfunktion des Referenzknotens in Entsprechung zu der Phasenfunktion angewendet wird, wobei ein maximaler Phasenversatzwert $f_{maxwobbeln}$ bestimmt ist durch:

$$f_{maxwobbeln} = \frac{T_{decodieren}}{T_{sync} - T_{schlafen}}$$

wobei $T_{decodieren}$ eine Decodierzeit des Elementknotens (14; 16) ist, und wobei $T_{schlafen}$ eine Schlafzeit des Elementknotens (14; 16) ist.

15. Netz gemäß einem der Ansprüche 10 bis 14, bei dem der Synchronisationsperiodenveränderer (34) wirksam ist, um die Synchronisationsperiode ($T_{sync}$, $T_{wobbeln}$) für eine spezifische Anzahl $N_{wobbeln}$ von Perioden zu verändern, wobei die spezifische Anzahl $N_{wobbeln}$ von Perioden bestimmt ist durch:

$$N_{wobbeln} \cdot \left(1 - \frac{1}{1 + f_{wobbeln}}\right) \geq \frac{T_{senden}}{T_{hören}} \; ;$$

wobei $f_{wobbeln}$ ein Phasenversatz der ersten Funktion ist;

wobei $T_{senden}$ eine Synchronisationssignallänge des Synchronisationssignals (140; 140') ist; und

wobei $T_{hören}$ eine Hörzeit ist, die einem Hören-Zustand (210) zugeordnet ist.

16. Netz gemäß Anspruch 15, bei dem der Synchronisationsperiodenveränderer (34) wirksam ist, um die spezifische Anzahl $N_{wobbeln}$ von Perioden derart zu bestimmen, dass nach $N_{wobbeln}$ Perioden der Sender (32) das Synchronisationssignal in einem gleichen Zeitschlitz wie zuvor sendet, und bei dem die Anzahl von Perioden $N_{wobbeln}$ bestimmt ist durch:

$$N_{wobbeln} \cdot (T - T_{wobbeln}) = T \; ;$$

wobei $T$ eine Periode der ersten Funktion ist; und

wobei $T_{wobbeln}$ eine Dauer einer veränderten Synchronisationsperiode ist.

17. Netz gemäß einem der Ansprüche 10 bis 16, bei dem der Synchronisationsperiodenveränderer (34) wirksam ist, um den Zeitpunkt, zu dem der Referenzknoten (12) das Synchronisationssignal (140) sendet, in Bezug auf den Zeitpunkt, zu dem ein Elementknoten (14) ein Synchronisationssignal (140') sendet, progressiv zu verschieben.

18. Verfahren zum Betreiben eines Netzes (10), das die folgenden Schritte aufweist:

Senden einer Sequenz von Synchronisationssignalen (140) durch einen Referenzknoten (12), wobei die Synchronisationssignale (140) zeitlich durch eine Synchronisationsperiode ($T_{sync}$) getrennt sind, wobei die Synchronisationsperiode ($T_{sync}$) innerhalb einer global vorbestimmten Zeitschlitzstruktur ist und das Synchronisationssignal (140) eine Synchronisationssignallänge ($T_{senden}$) aufweist;

Verändern einer Synchronisationssignalperiode ($T_{sync}$, $T_{wobbeln}$) für eine oder mehrere Perioden durch einen Synchronisationsperiodenveränderer des Referenzknotens (12);

Empfangen der Synchronisationssignale (140; 140') durch einen Elementknoten;

progressives Synchronisieren an den Synchronisationssignalen (140) durch den Elementknoten in einer Schritt-für-Schritt-Weise, wobei ein Schritt einen zugeordneten Synchronisationszustand aufweist; und
Senden von Synchronisationssignalen (140; 140') durch den Elementknoten zu Zeitpunkten, wobei die Zeitpunkte von einem Synchronisationszustand in einem zugeordneten Schritt abhängen;
Empfangen der Synchronisationssignale (140; 140') durch einen weiteren Elementknoten;
progressives Synchronisieren an den Synchronisationssignalen (140) durch den weiteren Elementknoten in einer Schritt-für-Schritt-Weise, wobei ein Schritt einen zugeordneten Synchronisationszustand aufweist; und
Senden von Synchronisationssignalen (140; 140') durch den weiteren Elementknoten zu Zeitpunkten, wobei die Zeitpunkte von einem Synchronisationszustand in einem zugeordneten Schritt abhängen;
wobei der Elementknoten (14) und der zusätzliche Elementknoten (16) angepasst sind, um in der gleichen Weise auf ein empfangenes Synchronisationssignal (140; 140') zu reagieren, unabhängig davon, ob das Synchronisationssignal (140; 140') von dem Referenzknoten (12) oder dem Elementknoten (16, 14) ausgeht.

**19.** Computerprogramm mit einem Programmcode zum Durchführen eines Verfahrens gemäß Anspruch 18, wenn das Programm auf einem Computer läuft und der Computer mit dem zu betreibenden Netz verbunden ist.

## Revendications

**1.** Réseau comprenant:

un noeud de référence (12) adapté pour émettre une séquence de signaux de synchronisation (140), les signaux de synchronisation (140) étant séparés dans le temps par une période de synchronisation ($T_{sync}$), la période de synchronisation ($T_{sync}$) se situant dans une structure d'intervalle de temps prédéterminée globalement et un signal de synchronisation (140) ayant une longueur de signal de synchronisation ($T_{transmit}$);
le noeud de référence (12) comprenant un variateur de période de synchronisation (34) adapté pour faire varier la période de synchronisation ($T_{sync}$, $T_{sweep}$) pendant une ou plusieurs périodes;
un noeud de membre (14) adapté
pour recevoir les signaux de synchronisation (140; 140');
pour synchroniser pas à pas sur les signaux de synchronisation (140), un pas ayant un état de synchronisation y associé; et
pour émettre des signaux de synchronisation (140; 140') à des moments, les moments étant fonction d'un état de synchronisation dans un pas associé; et
le réseau comprenant par ailleurs:

un noeud de membre additionnel (16) adapté
pour recevoir les signaux de synchronisation (140; 140');
pour synchroniser pas à pas sur les signaux de synchronisation (140), un pas ayant un état de synchronisation y associé; et
pour émettre des signaux de synchronisation (140; 140') à des moments, les moments étant fonction d'un état de synchronisation dans un pas associé;
le réseau étant **caractérisé par le fait que** le noeud de membre (14) et le noeud de membre additionnel (16) sont adaptés pour réagir de la même manière à un signal de synchronisation reçu (140; 140') quel que soit le signal de synchronisation (140; 140') issu du noeud de référence (12) ou du noeud de membre (16, 14).

**2.** Réseau selon la revendication 1, dans lequel le noeud de membre (14) est adapté pour uniquement soit émettre, soit recevoir en même temps.

**3.** Réseau selon l'une des revendications 1 à 2, dans lequel le noeud de membre (14) et le noeud de membre additionnel (16) sont adaptés pour communiquer l'un avec l'autre selon un plan de synchronisation déterminé par la séquence de signaux de synchronisation (140) générée par le noeud de référence (12).

**4.** Réseau selon l'une des revendications 1 à 3, dans lequel le noeud de référence (12) comprend par ailleurs:

une commande de mode de balayage (36) destinée à commander le variateur de période de synchronisation (34), la commande de mode de balayage (36) étant opérationnelle pour détecter un événement et pour activer (37) le variateur de période de synchronisation (34) sur base d'un événement détecté.

**5.** Réseau selon la revendication 4, dans lequel l'événement détecté est un temps écoulé prédéfini.

**6.** Réseau selon la revendication 4, dans lequel la commande de mode de balayage (36) est opérationnelle pour surveiller s'il existe des signaux de synchronisation (140') dans le réseau qui sont décalés par rapport au signal de synchronisation (140) d'un décalage de temps différent de la période de synchronisation ($T_{sync}$) ou des multiples de cette dernière, et dans lequel l'événement détecté est une détection d'un tel signal de synchronisation décalé (140').

**7.** Réseau selon la revendication 6, dans lequel le décalage de temps est supérieur à un seuil minimum déterminé par une incertitude de synchronisation générale.

**8.** Réseau selon l'une des revendications 1 à 7, dans lequel le variateur de période de synchronisation (34) est opérationnel pour réduire la période de synchronisation ($T_{sync}/T_{sweep}$).

**9.** Réseau selon l'une des revendications 1 à 8, dans lequel le noeud de membre (14) est adapté:

pour augmenter une valeur de signal interne selon une première fonction donnée dans le temps dans un état d'écoute (210);
pour recevoir et décoder le signal de synchronisation (140; 140') et modifier la valeur de signal interne selon une deuxième fonction dans un état d'écoute (210);
pour comparer la valeur de signal interne avec une valeur de seuil dans un état d'écoute (210); et
pour entrer en un état de déclenchement (220, 230) lorsque la valeur de signal interne est égale à la valeur de seuil, où le noeud de membre (14) est opérationnel pour générer le signal de synchronisation (140; 140') en réponse à la valeur de signal interne égale à la valeur de seuil ou après un temps d'attente ($T_{wait}$), le temps d'attente commençant lorsque la valeur de signal interne est égale à la valeur de seuil.

**10.** Réseau selon la revendication 9, dans lequel le noeud de référence (12) comprend:

un variateur de période de synchronisation (34) destiné à faire varier la période de synchronisation ($T_{sync}$, $T_{sweep}$) pendant une ou plusieurs périodes,
dans lequel le variateur de période de synchronisation (34) est opérationnel pour faire varier la période de synchronisation ($T_{sync}$, $T_{sweep}$) de moins d'une variation de période maximale en fonction de la première fonction du noeud de membre.

**11.** Réseau selon la revendication 9 ou 10, dans lequel noeud de membre (14) a:

un état d'écoute (210) ayant un temps d'écoute $T_{listen}$;
un état d'émission (230) ayant une longueur de signal de synchronisation $T_{transmit}$; et
une fonction de phase $\Phi(t)$ comme première fonction, définie comme suit:

$$\phi(t) = \begin{cases} 0 & lorsque\ t \in [0, T_\Delta] \\ \dfrac{t - T_\Delta}{T_{listen}} & lorsque\ [T_\Delta T] \end{cases}$$

avec une période de fonction de phase T; et
avec un retard delta $T_\Delta$, qui est défini par

$$T_\Delta \leq T_{transmit}.$$

**12.** Réseau selon la revendication 11, dans lequel le noeud de membre (14)a:

un état d'attente (220) ayant un temps d'attente $T_{wait}$; ou
un état de sommeil (240) ayant un temps de sommeil $T_{sleep}$; et

un retard delta $T_\Delta$ qui est défini comme suit:

$$T_\Delta \le T_{wait} + T_{transmit},$$

ou

$$T_\Delta \le T_{wait} + T_{transmit} + T_{sleep}.$$

**13.** Réseau selon l'une des revendications 9 à 12, dans lequel le noeud de référence (12) a une fonction de phase Φ (t), définie comme:

$$\phi(t) = \begin{cases} 0 & lorsque\ t \in [0, T_\Delta] \\ (1 + f_{sweep})\dfrac{t - T_\Delta}{T_{listen}} & lorsque\ [T_\Delta T_{sweep}] \end{cases}$$

avec un décalage de phase offset $f_{sweep}$;
avec un temps d'écoute $f_{listen}$;
avec une durée $T_{sweep}$ d'une période de synchronisation changée; et
avec un retard delta ($T_\Delta$) qui est défini comme suit:

$$T_\Delta \le T_{transmit};$$

où $T_{transmit}$ est la longueur de signal de synchronisation; et
où le variateur de période de synchronisation (34) est opérationnel pour faire varier la période de synchronisation ($T_{sync}$, $T_{sweep}$) en appliquant un décalage de phase $f_{sweep} > 0$ à la fonction de phase du noeud de référence correspondant à la fonction de phase ci-dessus.

**14.** Réseau selon la revendication 13, dans lequel le noeud de référence (12) a:

un retard delta $T_\Delta$ qui est défini comme:

$$T_\Delta \le T_{wait} + T_{transmit},$$

ou

$$T_\Delta \le T_{wait} + T_{transmit} + T_{sleep},$$

où $T_{wait}$ est un temps d'attente; et
où le variateur de période de synchronisation (34) est opérationnel pour faire varier la période de synchronisation ($T_{sync}$, $T_{sweep}$) en appliquant un décalage de phase $f_{sweep} > 0$ à la fonction de phase du noeud de référence correspondant à la fonction de phase avec une valeur de décalage de phase maximale déterminée par:

$$f_{sweep\,\max} = \frac{T_{decode}}{T_{sync} - T_{sleep}}$$

où $T_{decode}$ est un temps de décodage du noeud de membre (14; 16), et où $T_{sleep}$ est un temps de sommeil du noeud de membre (14; 16).

**15.** Réseau selon l'une des revendications 10 à 14, dans lequel le variateur de période de synchronisation (34) est opérationnel pour faire varier la période de synchronisation ($T_{sync}$, $T_{sleep}$) pendant un nombre spécifique $N_{sweep}$ de périodes, où le nombre spécifique $N_{sweep}$ de périodes est déterminé par

$$N_{sweep} \cdot \left(1 - \frac{1}{1 + f_{swwp}}\right) \geq \frac{T_{transmit}}{T_{listen}};$$

où fsweep est un décalage de phase de la première fonction;
où $T_{transmit}$ est une longueur du signal de synchronisation (140; 140'); et
où $T_{listen}$ est un temps d'écoute associé à un état d'écoute (210).

**16.** Réseau selon la revendication 15, dans lequel le variateur de période de synchronisation (34) est opérationnel pour déterminer le nombre spécifique $N_{sweep}$ de périodes de sorte que, après $N_{sweep}$ périodes, l'émetteur (32) émette le signal de synchronisation dans un même intervalle de temps qu'auparavant, et où le nombre de périodes est déterminé par:

$$N_{sweep} \cdot \left(T - T_{sweep}\right) = T;$$

où T est une période de la première fonction; et
où $T_{sueep}$ est une durée d'une période de synchronisation modifiée.

**17.** Réseau selon l'une des revendications 10 à 16, dans lequel le variateur de période de synchronisation (34) est opérationnel pour décaler progressivement le moment auquel le noeud de référence (12) émet le signal de synchronisation (140) par rapport au moment auquel un noeud de membre (14) émet un signal de synchronisation (140').

**18.** Procédé permettant de faire fonctionner un réseau (10) comprenant les étapes suivantes consistant à:

émettre une séquence de signaux de synchronisation (140) par un noeud de référence (12), les signaux de synchronisation (140) étant séparés dans le temps par une période de synchronisation ($T_{sync}$), la période de synchronisation ($T_{sync}$) se situant dans une structure d'intervalle de temps prédéterminée globalement et le signal de synchronisation (140) ayant une longueur de signal de synchronisation ($T_{transmit}$);
faire varier une période de signal de synchronisation ($T_{sync}$, $T_{sweep}$) pendant une ou plusieurs périodes par un variateur de période de synchronisation du noeud de référence (12);
recevoir les signaux de synchronisation (140; 140') par un noeud de membre;
synchroniser progressivement, pas à pas, sur les signaux de synchronisation (140) par le noeud de membre, un pas ayant un état de synchronisation associé; et
émettre des signaux de synchronisation (140; 140') par le noeud de membre à des moments, les moments étant fonction d'un état de synchronisation state dans un pas associé;
recevoir les signaux de synchronisation (140; 140') par un autre noeud de membre;
synchroniser progressivement pas à pas sur les signaux de synchronisation (140) par l'autre noeud de membre, un pas ayant un état de synchronisation associé; et
émettre des signaux de synchronisation (140; 140') par l'autre noeud de membre à des moments, les moments étant fonction d'un état de synchronisation dans un pas associé;
dans lequel le noeud de membre (14) et le noeud de membre additionnel (16) sont adaptés pour réagir de la même manière à un signal de synchronisation reçu (140; 140') quel que soit le signal de synchronisation (140; 140') issu du noeud de référence (12) ou du noeud de membre (16, 14).

19. Programme d'ordinateur ayant un code de programme pour réaliser un procédé selon la revendication 18 lorsque le programme est exécuté sur un ordinateur et que l'ordinateur est connecté au réseau à faire fonctionner.

FIGURE 1A

38

140'
140

receiver

39          36

sweep
mode
controller

37          34

synchronization
period
changer

35          32

transmitter                    140

12

FIGURE 1B

$T_{sync}$

$T_{wait}$    $T_{transmit}$    $T_{decode}$

fire    wait    transmit    wait    fire    t

$T_{sync}$

## FIGURE 1C

$\Phi(t)$

$\Phi_{threshold}$

fire

0    t

$T_{\Delta}$    $T_{listen}$    T

$T_{sweep}$

## FIGURE 1D

110

120

130

150

140

160

140

- control
- first function
- second function
- comparison

FIGURE 2A

Sleeping
is over

Waiting
is over

Transmitting
is over

$\Phi=\Phi_{threshold}$

(1)  210  LISTENING  $T_{listen}$

(2)  220  WAITING  $T_{wait}$

(3)  230  TRANSMITTING  $T_{transmit}$

(4)  240  SLEEPING  $T_{sleep}$

Receiving
$T_{transmit}$

Decoding
$T_{decode}$

FIGURE 2B

FIGURE 3

FIGURE 4

FIGURE 5

FIGURE 6

FIGURE 7

FIGURE 8

FIGURE 9

FIGURE 10

FIGURE 11

FIGURE 12

FIGURE 13A

FIGURE 13B

FIGURE 13C

EP 1 802 013 B1

Sleeping
is over

Transmitting
is over

$\Phi = \Phi_{threshold}$

(1) LISTENING  (2) TRANSMITTING  (3) SLEEPING

## FIGURE 14

Phase

$T_{sleep}$  fire  fire

$\Phi_{threshold}$

0  $t$

$T_{sleep}$

$T_{listen}$  $T_{transmit}$

$T$  $T$

phase functionperiod

## FIGURE 15

FIGURE 16

FIGURE 17

FIGURE 18

FIGURE 19

# FIGURE 20

$$\Phi = \frac{\Phi_{threshold}}{2}$$

LISTEN

$\Phi = 0$

SLEEP

$T_{sleep}$

$T_{decode}$

TRANS-MIT

t

fire

$T_{transmit}$

# FIGURE 21

**FIGURE 22**

**FIGURE 23**

| Reference Node present | no | yes | no | yes |
|---|---|---|---|---|
| $T_{transmit}$ | $0.20 \cdot T_{sync}$ | $0.20 \cdot T_{sync}$ | $0.30 \cdot T_{sync}$ | $0.30 \cdot T_{sync}$ |
| Synchrony rate | 99.1% | 82.3% | 99.7% | 70.3% |

# FIGURE 24

FIGURE 25

**FIGURE 26**

**FIGURE 27**

FIGURE 28

FIGURE 29

**EP 1 802 013 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 10306788 A1

### Non-patent literature cited in the description

- **S. H. STROGATZ ; I. STEWART.** Coupled oscillators and biological synchronization. *Scientific American,* December 1993, vol. 269, 68-74
- **S. H. STROGATZ.** Spontaneous synchronization in nature. *IEEE International Frequency Control Symposium,* 1997
- **MIROLLO ; STROGATZ.** Synchronization of pulse-coupled biological oscillators. *SIAM J. APPL. MATH,* December 1990, vol. 50, 1645-1662
- **M. L. X. GUARDIOLA ; A. DIAZ-GUILERA ; C. J. PEREZ.** Synchronization, diversity, and topology of networks of integrate and fire oscillators. *Phys. Rev. E,* April 2000, vol. 62, 5565-5570
- **Y.-W. HONG ; A. SCAGLIONE.** Time synchronization and reach-back communications with pulse-coupled oscillators for UWB [Ultra Wideband] wireless ad hoc networks. *IEEE Conference on Ultra Wideband Systems and Technologies 2003,* November 2003, 190-194
- **A. TYRRELL ; G. AUER ; C. BETTSTETTER.** Delay tolerant decentralized time synchronization for wireless networks. *Submitted to IEEE International Conf. on Communications 2006,* September 2005
- **Y.-W. HONG ; B. SIKECI ; A. SCAGLIOINE.** Swarming activities to distribute information in large sensor networks. *Proc. MILCOM Conference,* October 2003, 682-687